# EUROPEAN PATENT APPLICATION

(11) **EP 4 727 113 A1**
(43) Date of publication of application: **15.04.2026**
(21) Application number: 24205897.2
(22) Date of filing: 10.10.2024
(51) Int. Cl.: H04N 7/18

(54) **A METHOD FOR CONTROLLING AN IMAGE PROCESSING STAGE FOR PROCESSING IMAGE DATA CAPTURED BY A SURVEILLANCE CAMERA**

(71) Applicant: Axis AB, 223 69 Lund (SE)
(72) Inventor: Yuan, Song, 223 69 Lund (SE)
(74) Representative: AWA Sweden AB

(57) **Abstract**

In an aspect there is provided a method for controlling an image processing stage for processing image data captured by a surveillance camera having a field-of-view greater than 180 degrees and being mounted in a downward looking configuration to monitor a scene, the method comprising:
obtaining image data captured by the surveillance camera, wherein the image data includes a first set of pixels depicting a central scene portion located below a horizon in the scene, and a second set of pixels depicting a peripheral scene portion located above the horizon,
performing a ceiling detection procedure comprising analyzing pixels of the second set of pixels, to determine whether to configure the image processing stage to operate in accordance with a ceiling operational mode, and
in response to determining to configure the image processing stage to operate in accordance with the ceiling operational mode, configuring the image processing stage to operate in accordance with the ceiling operational mode while processing subsequently captured image data, wherein the subsequently captured image data comprises a first set of pixels depicting the central scene portion and a second set of pixels depicting the peripheral scene portion, wherein the image processing stage comprises at least one image processing operation, and wherein the ceiling operational mode includes applying the at least one image processing operation to the first set of pixels of the captured image data but not to the second set of pixels of the captured image data.

## Description

### TECHNICAL FIELD

The present invention relates to a method for controlling an image processing stage for processing images captured by a surveillance camera, a processing device, and a computer program product.

### BACKGROUND

Surveillance cameras with a wide field of view (FOV) may be used in applications where monitoring of an expansive scene with a single camera is desired. Some surveillance cameras use fisheye lenses or multi-sensor configurations to provide a FOV exceeding 180 degrees. Mounting such a camera in a downward looking orientation, e.g., on a camera pole or suspended from a ceiling, enables the camera to capture an image of a scene extending both below and above the horizon. The additional FOV beyond 180 degrees may thus provide useful monitoring information about objects or events above the horizon. For instance, attempts to tamper with the camera from above may be detected.

### SUMMARY

However, as realized by the inventor, if a camera with a greater FOV than 180 degrees is mounted close to or flush against a ceiling, a relatively large portion of the image would be occupied by the ceiling area close to the camera (which in a typical setting would be out of focus). Hence, using the camera in such a configuration may result in an image portion not contributing any useful scene information. The additional FOV beyond 180 degrees may thus needlessly increase utilization of processing resources and, potentially, also degrade the image quality. It is an object of the present invention to address this issue.

According to a first aspect of the present invention, there is provided a method for controlling an image processing stage for processing image data captured by a surveillance camera having a field-of-view greater than 180 degrees and being mounted in a downward looking configuration to monitor a scene, the method comprising:
obtaining image data captured by the surveillance camera, wherein the image data includes a first set of pixels depicting a central scene portion located below a horizon in the scene, and a second set of pixels depicting a peripheral scene portion located above the horizon,
performing a ceiling detection procedure comprising analyzing pixels of the second set of pixels, to determine whether to configure the image processing stage to operate in accordance with a ceiling operational mode, and
in response to determining to configure the image processing stage to operate in accordance with the ceiling operational mode, configuring the image processing stage to operate in accordance with the ceiling operational mode while processing subsequently captured image data, wherein the subsequently captured image data comprises a first set of pixels depicting the central scene portion and a second set of pixels depicting the peripheral scene portion, wherein the image processing stage comprises at least one image processing operation, and wherein the ceiling operational mode includes applying the at least one image processing operation to the first set of pixels of the captured image data but not to the second set of pixels of the captured image data.

By applying a ceiling detection procedure to pixels of the second set of pixels, the method allows estimating or predicting, using image analysis, if the camera is in a ceiling-mounted configuration associated with a ceiling operational mode of the image processing stage, and configure the image processing stage accordingly. As will be further described herein, the ceiling-mounted configuration may typically correspond to a configuration where the camera is mounted close to or flush against the ceiling.

By configuring the image processing stage in accordance with the ceiling operational mode, image data subsequently captured by the surveillance camera during monitoring operation may be selectively processed. That is, the first set of pixels of the subsequently captured image data depicting the central scene portion (which may be expected to include useful scene information from a monitoring perspective) may be supplied and subjected to the at least one image processing operation of the image processing stage, while the second set of pixels of the subsequently captured image data depicting the peripheral scene portion above the horizon (which may be expected to not include useful scene information from a monitoring perspective as it includes the ceiling) may be excluded from the at least one image processing operation of the image processing stage. Thereby, spending valuable processing resources on pixels which do not contribute useful scene information from a monitoring perspective may be avoided. For instance, the second set of pixels of the subsequently captured image data may be discarded or ignored by the image processing stage.

It is further envisaged that the ceiling typically may be depicted as a relatively monotonous and/or monochromatic pixel region with an average pixel intensity deviating from the pixels depicting the central scene portion, especially in the ceiling-mounted configuration where for instance the peripheral scene portion may be relatively bright, and, often, include light sources. Hence, including the second set of pixels in a processed output image data may result in a perceived reduced image quality and/or be disturbing for a viewer. The second set of pixels may also have a negative impact on image analytics. For instance, flickering of light sources may cause false alarms and/or interfere with object detection and tracking algorithms.

By virtue of the pixel analysis-based ceiling detection procedure, the ceiling operational mode may be automatically configured, without relying on configuration information supplied by a user or technician installing the surveillance camera. The method hence facilitates a user-friendly deployment.

Meanwhile, the method enables the surveillance camera to utilize its full FOV, including the second set of pixels, in non-ceiling mounted configurations.

Thus, in some embodiments, the method further comprises, in response to determining (based on the ceiling detection procedure) to not configure the image processing stage to operate in accordance with the ceiling operational mode, configuring the image processing stage to operate in accordance with a non-ceiling operational mode, wherein the non-ceiling operational mode includes applying the at least one image processing operation to the first set of pixels and the second set of pixels of the subsequently captured image data.

In some embodiments, the at least one image processing operation includes at least one of: an image transform, an encoding operation, and/or an image analysis operation such as an object detection and/or object tracking operation.

Hence, at least one of an image transform, an encoding operation, and/or an image analysis operation may be applied selectively to the first set of pixels, while the second set of pixels may be excluded therefrom.

An image transform may comprise at least one of an image scaling operation and/or an image warping operation.

In some embodiments, the method further comprises, in response to determining to configure the image processing stage to operate in accordance with the ceiling operational mode (i.e., when the image processing stage operates in the ceiling operational mode): controlling a first setting of the surveillance camera, used by the surveillance camera during capturing of the subsequently captured image data, based on a first pixel statistics, wherein the first pixel statistics is based on pixels depicting the central scene portion but not pixels depicting the peripheral scene portion.

Hence, the second set of pixels may be ignored / excluded from consideration also for the purpose of controlling (at least) a first setting of the surveillance camera.

The first setting of the surveillance camera may be a setting of one or more exposure-related control parameters of the surveillance camera (e.g., shutter speed, aperture, ISO value and/or camera lighting). The first pixel statistics may be indicative of lighting condition in the central scene portion.

In some embodiments, the method further comprises, in response to determining to configure the image processing stage to operate in accordance with the ceiling operational mode (i.e., when the image processing stage operates in the ceiling operational mode), controlling a second setting of the surveillance camera, used by the surveillance camera during capturing of the subsequently captured image data, based on a second pixel statistics, wherein the second pixel statistics is based on pixels depicting the peripheral scene portion but not pixels depicting the central scene portion.

While processing the second set of pixels in the image processing stage may be wasteful and/or undesirable for the aforementioned reasons, it is contemplated that pixels depicting the peripheral scene portion still may be useful for the purpose of controlling some camera settings of the surveillance camera.

In some embodiments, the method further comprises, in response to determining to configure the image processing stage to operate in accordance with the ceiling operational mode, discarding the second set of pixels of the subsequently captured image data. Hence, the second set of pixels depicting the peripheral scene portion, i.e., including the ceiling, may be discarded, thus avoiding straining the subsequent image processing pipeline.

In embodiments where the second set of pixels of the subsequently captured image data is utilized for determining pixel statistics, e.g., second pixel statistics as set out above, the method may comprise determining the pixel statistics, and thereafter discarding the second set of pixels.

In some embodiments, the image data is an image frame, and
wherein performing the ceiling detection procedure comprises:
determining a contrast metric for each of a set of pixels or pixel blocks of the second set of pixels distributed in a radial direction of the image frame with increasing distance from pixels depicting the horizon, and
analyzing a variation of the contrast metric in the radial direction to identify whether the variation of the contrast metric defines a peak,
wherein a condition for determining to configure the image processing stage to operate in accordance with the ceiling operational mode is that the peak is identified.

Thus, the determination of whether to configure the image processing stage to operate in accordance with the ceiling operational mode may be based on a variation of the contrast metric in the radial direction. In a ceiling-mounted configuration, at the most extreme viewing angles covered by the surveillance camera (e.g., corresponding to the edges of the exposed image area of the image frame), the pixels will tend to be out of focus and hence produce a low contrast metric. The contrast metric is also expected to be low for the pixels depicting the horizon ("horizon pixels") as the horizon is located at infinity and thus out of focus. In-between these viewing angles of "minimum contrast" the contrast metric will, as realized by the inventor, vary to define a contrast peak. The contrast peak will typically be obtained for pixels of the second set of pixels depicting portions of the ceiling within the depth-of-field of the surveillance camera. Hence, presence of a contrast peak may be used as an indicator or predictor of a ceiling-mounted configuration, and thus be used as a condition for determining whether to configure the image processing stage to operate in the ceiling operational mode.

The contrast-based ceiling detection procedure may advantageously be used in implementations where the surveillance camera comprises a single fisheye lens and a single image sensor arranged behind the fisheye lens and defining the full FOV of the surveillance camera, and wherein the image data is an image frame captured by the image sensor. Such single-sensor and fisheye lens-based implementation of the surveillance camera may hereinafter for conciseness be termed "single-sensor implementation".

In some embodiments, the ceiling detection procedure further comprises:
determining, for each of at least one further radial direction, a contrast metric for each of a set of pixels or pixel blocks of the second set of pixels distributed in the respective radial direction with increasing distance from pixels depicting the horizon,
analyzing a respective variation of the contrast metric in the respective radial direction to identify whether the respective variation of the contrast metric defines a respective peak, and
wherein a condition for determining to configure the image processing stage to operate in accordance with the ceiling operational mode is that the peak is identified for at least a predetermined minimum number of the radial directions.

The contrast may thus be analyzed in two or more radial directions. This may further improve the reliability of the ceiling detection procedure, in particular to reduce a risk of false positives (i.e., erroneously predicting that the camera is in a ceiling-mounted configuration). Requiring the peak to be identified for each of the radial directions may provide the most effective suppression of false positives.

In some embodiments, the surveillance camera comprises a lens arrangement and at least a first and second image sensor arranged behind the lens arrangement such that each image sensor depicts a portion of the scene from a respective viewpoint,
wherein obtaining the image data comprises obtaining a first partial image frame captured by the first image sensor and a second partial image frame captured by the second image sensor, wherein the second set of pixels of the image data comprises a first subset of pixels from the first partial image frame and a second subset of pixels from the second partial image frame, and wherein the first and second subsets of pixels depict overlapping portions of the peripheral scene portion, and
wherein performing the ceiling detection procedure comprises:
   identifying in the first subset of pixels a set of first feature points distributed in a radial direction with increasing distance from pixels depicting the horizon in the first partial image frame,
   identifying for each first feature point a matching second feature point in the second subset of pixels,
   determining for each first feature point a parallax error with respect to its matching second feature point, and
   analyzing a variation of the parallax error in the radial direction to determine whether the parallax error increases in the radial direction,
   wherein a condition for determining to configure the image processing stage to operate in accordance with the ceiling operational mode is that the parallax error increases in the radial direction.

Thus, for such a "multi-sensor implementation" of the camera (i.e., wherein the camera comprises two or more image sensors), the determination of whether to configure the image processing stage to operate in accordance with the ceiling operational mode may be based on a variation of the parallax error in the radial direction.

In a ceiling-mounted configuration, the first and second partial image frames captured by the first and second image sensors will depict overlapping regions of the ceiling, albeit from different viewpoints. When the camera is in a ceiling-mounted configuration, the differing viewpoints will produce a parallax error between matching feature points in the first and second subsets of pixels, which will tend to increase in the radial direction, i.e., with increasing viewing angles. This may be understood considering that at the horizon, the parallax error between matching feature points will approach zero as the horizon is located at infinity. From this point of minimum parallax error, the parallax error will increase for matching feature points detected at greater viewing angles as they are located closer to the surveillance camera. On the other hand, in case of absence of a ceiling, or if the camera is mounted at a large distance from a ceiling, the parallax error tends to remain small as the viewing angle is increased above the horizon. The parallax error may be substantially constant as the viewing angle is increased, or in any case increase at a relatively low rate. Hence, an increasing parallax error in the radial direction may be used as an indicator or predictor of a ceiling-mounted configuration, and thus be used as a condition for determining whether to configure the image processing stage to operate in the ceiling operational mode.

In the present disclosure, the term "matching feature points" means a pair of feature points in the first and second subsets of pixels depicting a same feature of the peripheral scene portion, albeit from different viewpoints. In the present disclosure, the term "(first/second) partial image frame" is used to indicate that the partial image frames each cover a part of the full FOV of the surveillance camera. Thus, the partial image frames captured by the at least first and second image sensors of the surveillance camera may be stitched into a composite image frame covering the full FOV of the surveillance camera.

In some embodiments, the method further comprises mapping the first feature points and the matching second feature points to a common compositing surface, wherein the parallax error for each first feature point is determined by computing a distance between the first feature point and its matching second feature point, when mapped to the common compositing surface.

A distance between matching feature points mapped to a common compositing surface (i.e., a compositing / stitching surface for stitching of partial image frames into a composite image frame) amounts to a convenient and reliable metric of the parallax error.

In some embodiments, the second set of pixels of the image data further comprises a third subset of pixels from a third partial image frame and a fourth subset of pixels from a fourth partial image frame, and wherein the third and fourth subsets of pixels depict overlapping portions of the peripheral scene portion, and
wherein performing the ceiling detection procedure further comprises:
identifying in the third subset of pixels a set of third feature points distributed in a radial direction with increasing distance from pixels depicting the horizon in the third partial image frame,
identifying for each third feature point a matching fourth feature point in the fourth subset of pixels,
determining for each third feature point a parallax error with respect to its matching fourth feature point, and
analyzing a variation of the parallax error in the radial direction of the third partial image frame to determine whether the parallax error increases in the radial direction of the third partial image frame,
wherein a further condition for determining to configure the image processing stage to operate in accordance with the ceiling operational mode is that the parallax error determined for the third feature points increases in the radial direction of the third partial image frame.

The parallax error may thus be analyzed for a further pair of overlapping subsets of pixels, obtained from a third and fourth partial image frame. Consequently, the parallax error may be analyzed in two or more radial directions. This may further improve the reliability of the ceiling detection procedure, in particular to reduce a risk of false positives (i.e., erroneously predicting that the camera is in a ceiling-mounted configuration).

The third partial image frame may for example refer to a third partial image frame captured by a third image sensor (i.e., different from the first and second image sensors) arranged behind the lens arrangement to depict a portion of the scene from a respective viewpoint. The fourth partial image frame may in this case refer to either the first or second partial image frame. Alternatively, the fourth partial image frame may here refer to a fourth partial image frame captured by a fourth image sensor (i.e., different from the first, second and third image sensors) arranged behind the lens arrangement to depict a portion of the scene from a respective viewpoint. Thus, the terms "third" and "fourth" are here used as mere labels to refer to a further pair of overlapping partial image frames, different from the first and second partial image frames captured by the first and second image sensors, respectively.

In some embodiments applicable to the multi-sensor implementation of the surveillance camera, the subsequently captured image data processed by the image processing stage comprises a sequence of composite image frames, each composite image frame formed by stitching partial image frames captured by the at least first and second image sensors such that each composite image frame comprises a first set of pixels depicting the central scene portion and a second set of pixels depicting the peripheral scene portion.

Thus, the at least one image processing operation of the image processing stage may be applied to the first set of pixels of composite image frames comprising the first and second sets of pixels.

In some embodiments applicable to the multi-sensor implementation of the surveillance camera, the subsequently captured image data processed by the image processing stage instead comprises partial image frames captured by the at least first and second image sensors, wherein the captured partial image frames in combination comprises a first set of pixels depicting the central scene portion and a second set of pixels depicting the peripheral scene portion, and
wherein the at least one image processing operation of the image processing stage comprises a stitching operation for forming a composite image frame by stitching the partial image frames, and wherein the stitching operation, in the ceiling operational mode, is applied to the first set of pixels of the partial image frames but not to the second set of pixels of the of the partial image frames.

Thus, the at least one image processing operation of the image processing stage may be applied to partial image frames. Further, the stitching operation may be implemented by the image processing stage and thus, when configured in accordance with the ceiling operational mode, exclude the second set of pixels of the subsequently captured partial image frames during stitching such that only the first set of pixels of the subsequently captured partial image frames are stitched to form a composite image frame.

In some embodiments, the surveillance camera comprises an orientation sensor, wherein the ceiling detection procedure is performed responsive to detecting, by the orientation sensor, a downward looking orientation of the surveillance camera.

The orientation sensor may hence be used as a first non-image based technique for detecting that the surveillance camera potentially may be installed in a ceiling-mounted configuration. However, as an orientation sensor only may detect the orientation of the surveillance camera, a sensor output from the orientation sensor is not sufficient to distinguish from a configuration where the surveillance camera is suspended from a camera pole, or at a large distance from a ceiling. Therefore, the image-analysis based approach involving analysis of the second set of pixels may be employed as a second detection stage to conclusively detect the ceiling-mounted configuration.

In some embodiments, the method further comprises obtaining predetermined horizon data indicating pixel coordinates for the horizon in the image data, and identifying the second set of pixels using the predetermined horizon data.

The pixel coordinates of the horizon may be established a priori by calibration measurements, or supplied by a manufacturer of an imaging module comprising the image sensor(s) and the lens (arrangement). This predetermined information may be used as input to the method to determine which parts of the image data corresponds to the first and second sets of pixels.

According to a second aspect, there is provided a processing device configured to perform the method of the first aspect or any embodiments thereof for controlling an image processing stage for processing image data captured by a surveillance camera. The processing device may be comprised in the surveillance camera. The image processing stage may be an image processing stage of the surveillance camera.

According to a third aspect, there is provided a computer program product comprising computer program code portions configured to perform the method according to the first aspect or any embodiments thereof.

In general, any embodiment, feature, effect or advantage discussed in connection with the first aspect applies correspondingly to the surveillance system and the computer program product of the second and third aspects.

### BRIEF DESCRIPTION OF THE DRAWINGS

The above, as well as additional objects, embodiments, features and effects of the present disclosure, may be better understood through the following illustrative and non-limiting detailed description, with reference to the appended drawings. In the drawings like reference numerals will be used for like elements unless stated otherwise.
Fig. 1 schematically shows a surveillance camera in a ceiling-mounted configuration.
Fig. 2 schematically shows a surveillance camera in another ceiling-mounted configuration.
Fig. 3 schematically shows a surveillance camera in a pole-mounted configuration.
Fig. 4 schematically shows a system comprising a single-sensor implementation of a surveillance camera.
Fig. 5 shows a block diagram of an image processing stage.
Fig. 6a-b schematically illustrates image data in the form of an image frame captured by the surveillance camera of Fig. 4 (Fig. 6a), and pixels of a second set of pixels of the image frame depicting a peripheral scene portion (Fig. 6b).
Fig. 7a-b are schematic diagrams of a variation of a contrast metric when the surveillance camera is not in a ceiling-mounted configuration (Fig. 7a) and when the surveillance camera is in a ceiling-mounted configuration (Fig. 7b).
Fig. 8 schematically shows a system comprising a multi-sensor implementation of a surveillance camera.
Fig. 9 schematically illustrates a composite image frame formed by stitching partial image frames captured by the surveillance camera of Fig. 8.
Fig. 10a-b schematically illustrates the image data from first and second partial image frames captured by the multi-sensor surveillance camera of Fig. 8 (Fig. 10a), and determination of a parallax error between matching feature points in the first and second partial image frames (Fig. 10b).
Fig. 11a-b are schematic diagrams of parallax error when the surveillance camera is not in a ceiling-mounted configuration (Fig. 11a) and when surveillance camera is in a ceiling-mounted configuration (Fig. 11b).
Fig. 12 is a flow chart of a method for controlling an image processing stage for processing image frames captured by a surveillance camera.
Fig. 13 is a flow chart of an example method for analyzing pixels of image data captured by a single-sensor surveillance camera.
Fig. 14 is a flow chart of an example method for analyzing pixels of image data captured by a multi-sensor surveillance camera, such as the surveillance camera of the surveillance system of Fig. 8.

### DETAILED DESCRIPTION

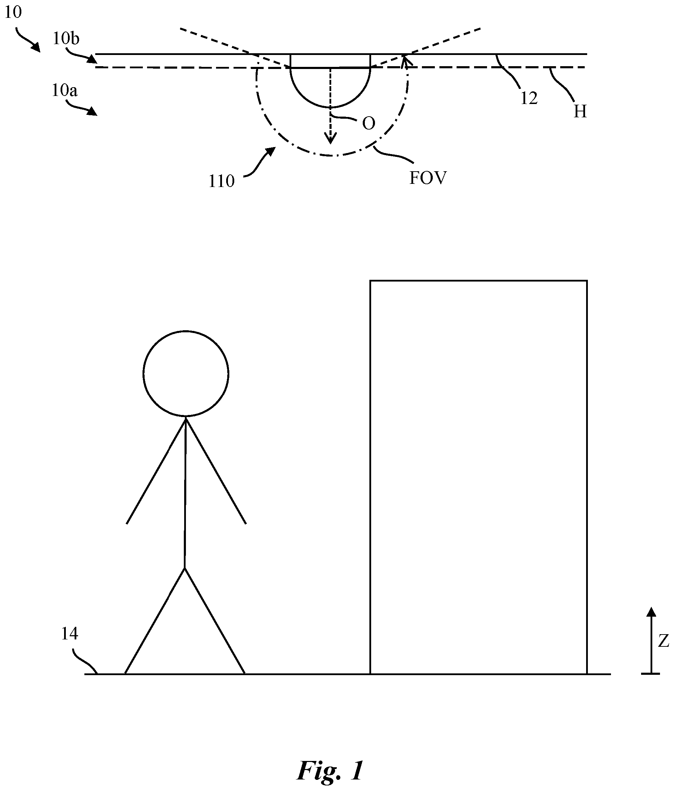

Fig. 1 shows a scene 10 and a surveillance camera 110. The surveillance camera 110 may be a camera device / image capturing device suitable for image-based monitoring applications, such as video surveillance. The surveillance camera 110 may be a networked camera, such as an Internet Protocol (IP) camera. A non-networked implementation of the surveillance camera 110 is however also possible.

The surveillance camera 110 may in the following, for conciseness, be termed "camera 110". The camera 110 is arranged in a ceiling-mounted configuration to monitor the scene 10. The camera 110 is as shown mounted in a ceiling 12, e.g., flush against the ceiling 12. The camera 100 is mounted in a downward looking configuration, meaning that an optical axis O of the surveillance camera 110 is pointing in a negative vertical direction -Z, e.g., towards a floor 14 (or more generally towards ground) of the scene 10. The camera 110 is hence arranged to monitor the scene 10 from above.

The camera 110 has, as shown, a field-of-view (FOV) greater than 180 degrees. Hence, the scene 10 monitored by the camera 110 includes a central scene portion 10a located below a horizon H in the scene 10, and a peripheral scene portion 10b located above the horizon H. In the ceiling-mounted configuration shown in Fig. 1, the peripheral scene portion 10b includes as shown a portion of the ceiling 12. Thus, in other words, a central portion or sub-range of the FOV of the surveillance camera 110 covers the central scene portion 10a located below the horizon H and a peripheral portion or sub-range of the FOV of the surveillance camera 110 covers the peripheral scene portion 10b located above the horizon H and including the ceiling 12.

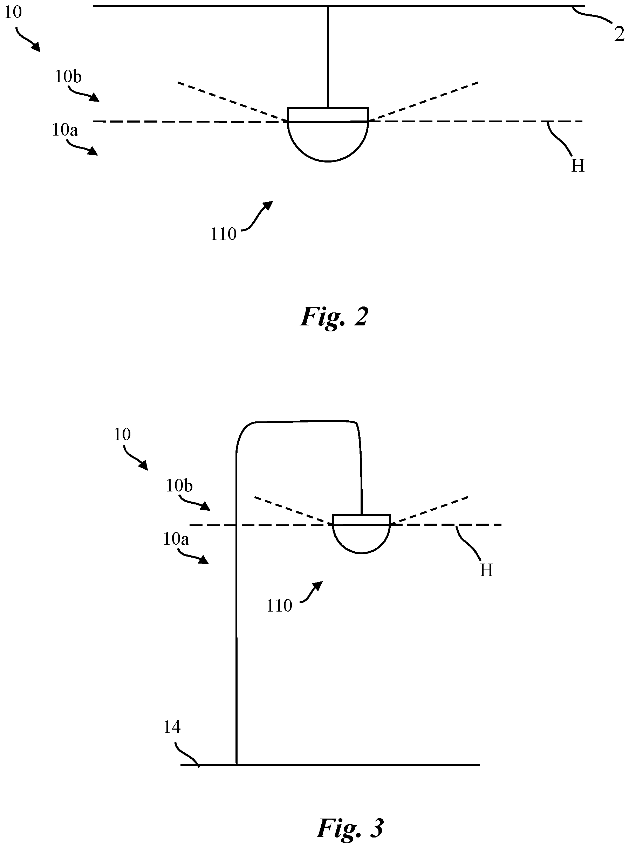

Fig. 2 shows the camera 110 in another ceiling-mounted and downward looking configuration, wherein the camera 110 instead of being mounted flush against the ceiling 12 is suspended from the ceiling 12, e.g., by hanging camera mount such as a pole. The camera 110 and thus arranged at a greater distance from the ceiling 12 than in the flush-mounted configuration of Fig. 1.

Fig. 3 shows the camera 110 in a pole-mounted configuration, i.e., hanging from a pole. Also in this configuration the camera 110 is looking downward, towards the ground 14. In contrast, in the scenario shown in Fig. 3 there is no ceiling present above the camera 110. Fig. 3 may for instance correspond to a use-case where the camera 110 is used in an outdoor environment. The peripheral scene portion 10b may for instance be formed by an open sky.

As may be appreciated, in the ceiling-mounted configuration of Fig. 1, the central scene portion 10a will typically be the region of interest of the scene 10 from a monitoring perspective. Meanwhile, the peripheral scene portion 10b may be of little to no interest from a monitoring perspective since it will mainly comprise the ceiling 12. It is further contemplated that any objects of interest moving along the ceiling 12 also will be comprised in the central scene portion 10a, i.e. the region of interest. Furthermore, it is envisaged that a distance to the ceiling 12 along the maximum viewing angles within the FOV of the camera 110 will be smaller than the focus distance of the camera 110, such that a surrounding area of the ceiling 12 in the vicinity of the camera 110 will be out of focus, i.e., outside the depth of field (DOF) of the camera 110. The additional FOV beyond 180 degrees may thus in Fig. 1 not provide any useful monitoring information about objects or events above the horizon H. On the other hand, in Fig. 2, due to the increased distance to the ceiling 12, the ceiling 12 will cover a smaller sub-range of the FOV of the camera 110 than in Fig. 1. Additionally, it is envisaged that the ceiling 12 will tend to be less strongly out of focus, and to a greater extent be located within the DOF of the camera 110. The additional FOV beyond 180 degrees may hence in this case provide useful monitoring information about objects or events above the horizon H, provided the distance to the ceiling 12 is relatively large. Similarly, in the scenario in Fig. 3, there is no ceiling 12 and the additional FOV beyond 180 degrees may thus also in this scenario provide useful monitoring information about objects or events above the horizon H.

As may be appreciated, while Fig. 1 shows the camera 110 as being mounted flush to the ceiling 12, the issue discussed with reference to Fig. 1 may apply correspondingly to a configuration where the camera 110, like in Fig. 2, is suspended from the ceiling 12, however at a relatively short distance such that the peripheral scene portion 10b mainly comprises the ceiling 12, and thus any objects of interest moving along the ceiling 12 also will be comprised in the central scene portion 10a. Herein, the term "ceiling-mounted configuration" may hence be used to refer to either a flush-mounted scenario corresponding to Fig. 1, or a scenario corresponding to Fig. 2 wherein the distance between the ceiling 12 and the camera 110 is small (e.g., less than the lower boundary of the DOF of the camera 110).

The set of pixels of an image frame captured by the camera 110 and depicting the central scene portion 10a is in the following termed "first set of pixels", or interchangeably "central pixels". The set of pixels of the image frame depicting the peripheral scene portion 10b is in the following termed "second set of pixels" or, interchangeably, "peripheral pixels".

As may be understood from the above, where the camera 110 is mounted close to or flush against a ceiling 12, the second set of pixels / peripheral pixels may be of little value from a monitoring perspective. Additionally, the peripheral pixels may as explained above introduce a number of issues, such as unnecessary utilization of processing resources, degraded image quality of the first set of pixels / central pixels, impaired image analytics, etc. The present disclosure provides approaches for addressing or mitigating one or more of these issues.

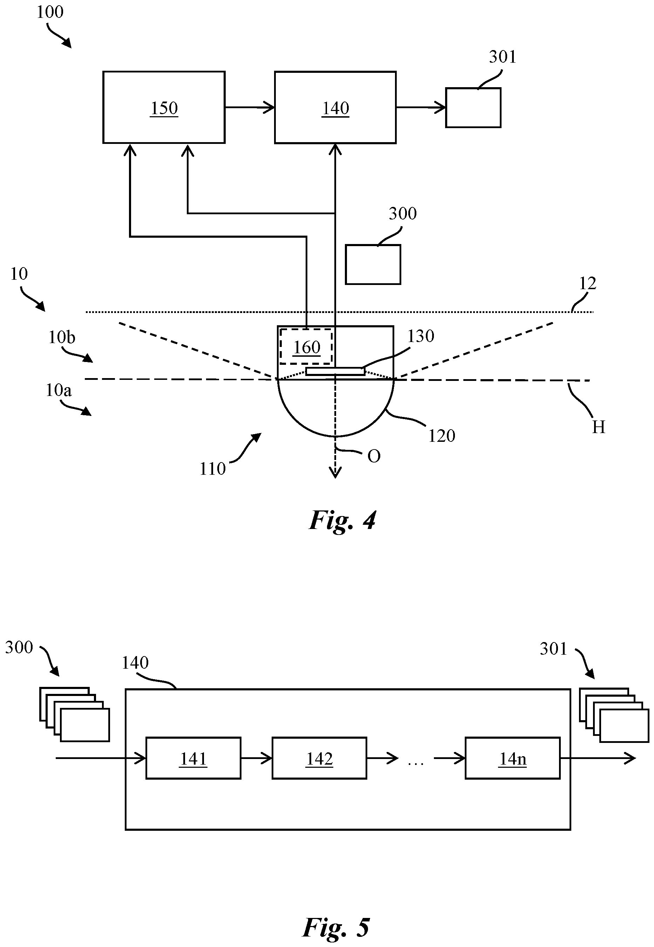

Fig. 4 schematically shows a block diagram of a system 100 comprising the surveillance camera 110, an image processing stage 140 and a processing device 150. The dotted line schematically indicates a possible position of a ceiling 12 in case the surveillance camera 110 is in a ceiling-mounted configuration. The image processing stage 140 is configured to process image frames captured by the camera 110. The processing device 150 is configured to perform a method for controlling the image processing stage 140, as set out in the following. The camera 110 is in the illustrated example of a single-sensor implementation, thus comprising a fisheye lens 120 and a single image sensor 130 arranged behind the fisheye lens 120. Thus, during operation, the image sensor 130 may capture an image frame 300 depicting the scene 10 as imaged by the fisheye lens 120 onto the image sensor 130. As further shown, the camera 110 may optionally comprise an orientation sensor 160 configured to detect a physical orientation of the camera 110. The orientation sensor 160 may for instance comprise one or more accelerometers and/or gyros.

While Fig. 4 for illustrative clarity shows the blocks representing the image processing stage 140 and the processing device 150 outside of the camera 110, it is to be noted that both collocated and distributed implementations of the depicted system 100 are possible. For instance, in a typical configuration, both the image processing stage 140 and the processing device 150 may be comprised in the camera 110. In another configuration, the processing device 150 may be comprised in the camera 110 while the image processing stage 140 may be arranged outside of the camera 110 in an external device. For instance, the image processing stage 140 may be an image processing stage of an external camera controller, or a remote or non-edge device (such as a server-side image processing stage). The camera 110 and the external device may be connected over a network (wired or wirelessly), or via a non-networked communication interface (such as a USB interface), to receive and process image frames captured by the camera 110. In another configuration, the image processing stage 140 may be comprised in the camera 110 while the processing device 150 may be arranged outside of the camera 110 in an external device, e.g., in an external device of any of the above-mentioned types. In yet another configuration, both the image processing stage 140 and the processing device 150 may be arranged outside of the camera 110, e.g., in an external device of any of the above-mentioned types. A distributed configuration may be useful in case the camera 110 has limited computational resources, and it thus is desirable to offload the camera 110 from some image processing operations, and/or the processing involved in the method performed by the processing device 150.

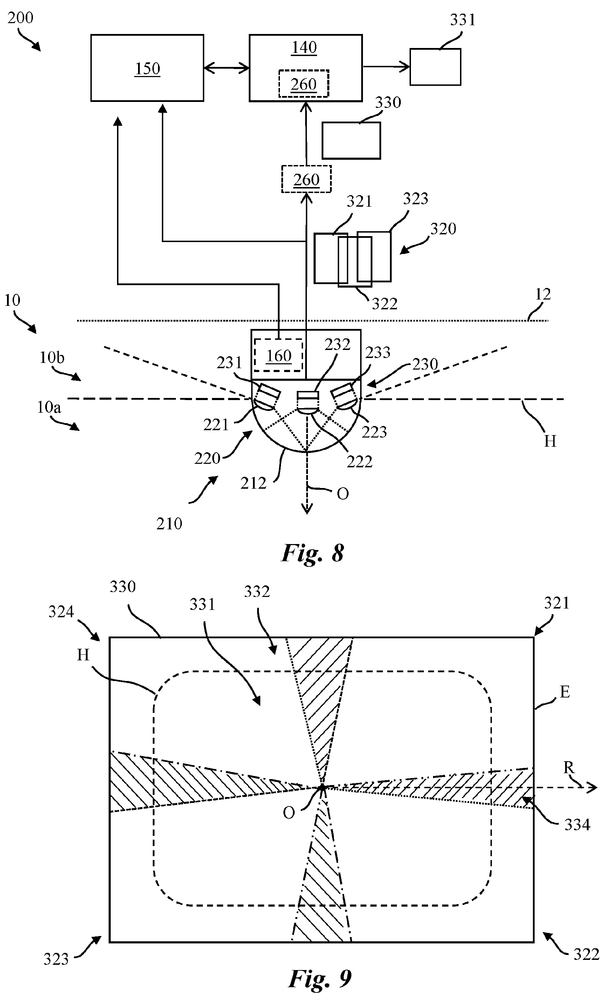

Fig. 5 shows in further detail the image processing stage 140 in the form of a block diagram. The image processing stage 140 is configured to process image data such as image frames 300 captured by the camera 110 and output processed image data such as image frames 301. Each image frame 300 may for instance be an image frame of a sequence of image frames 300 captured by the camera 110 (at a fixed or variable frame rate), wherein the image processing stage 140 may output processed image frames 301 in the form of a video stream. As further set out in the following, the image frames processed by the image processing stage 140 may more generally be image frames captured by a camera of a single-sensor implementation, such as the camera 110, or composite image frames or partial image frames captured by a camera of a multi-sensor implementation, such as the camera 210 of Fig. 8.

The image processing stage 140 comprises as shown a number of image processing operations 141, 142, ..., 14n. The number of image processing operations of the image processing stage 140 may vary depending on application. In any case, the image processing stage 140 comprises at least one image processing operation. The image processing stage 140 may for instance comprise: an image transform operation, an encoding operation, and/or an image analysis operation.

An image transform may comprise at least one of an image scaling operation and/or an image warping operation. A scaling operation may comprise scaling of a received image frame 300, such as resizing by upsamling or downsampling. A warping operation may comprise optical distortion correction. Thus, an image transform in the form of a mapping may be applied to the pixels of a received image frame 300 to reduce the impact of optical aberrations or distortions introduced into the image frame 300 by the lens or lens arrangement. As a non-limiting example, a warping operation may comprise mapping the typically distorted and non-rectangular image field produced by a fisheye lens to a rectangular image area.

An encoding operation may comprise encoding a received image frame 300 into an encoded image frame. The image frame 300 may for instance be encoded into a format suitable for transmission over an IP network, storage and/or viewing on a monitor. Where each image frame 300 forms part of a sequence of image frames 300 of a video stream, the encoding operation may encode the sequence of image frames 300 into an encoded video stream.

An image analysis operation may comprise image and/or video analytics such as an object detection and/or object tracking operation. A received image frame 300 may for instance be processed to detect and/or track an object in the image frame 300. Any conventional type of object detection and tracking algorithms, as per se are known in the art, may be used.

Where the image processing stage 140 comprises more than one image processing operation, the image processing operations may be applied sequentially to an image frame 300 received by the image processing stage 140. For instance, the image processing stage 140 may comprise each one of an image transform operation (e.g., scaling and/or warping), an encoding operation and an image analysis operation. The image processing stage 140 may in this case process a captured image frame by: first applying the image transform operation to the captured image, then applying the encoding operation to the output from the image transform operation, and then applying the image analysis operation to the encoded output from the encoding operation. However, parallel processing is not precluded. For instance, an image analysis operation may be applied to a captured image frame in parallel to applying an image transform operation and/or encoding operation to the captured image frame. Thus, the image analysis operation may be applied to pixel data of the captured image frame unaltered by the image transform and/or encoding operation. This is however merely one example and other combinations of sequential and/or parallel image processing operations are possible.

The operations of the image processing stage 140 may be implemented in both hardware and software. In a software implementation, the operations may be performed by one or more processors, such as one or more central processing units, which in association with computer program code instructions stored on a (non-transitory) computer-readable medium, such as a non-volatile memory, causes the one or more processors to carry out the image processing operation(s) 141, 142, etc. of the image processing stage 140. Examples of non-volatile memory include read-only memory, flash memory, ferroelectric RAM, magnetic computer storage devices, optical discs, and the like. In a hardware implementation, the image processing stage 140 may instead be realized by dedicated circuitry configured to implement the image processing operation(s) 141, 142. etc. The circuitry may be in the form of one or more integrated circuits, such as one or more application specific integrated circuits (ASICs) or one or more field-programmable gate arrays (FPGAs). It is to be understood that it is also possible to have a combination of a hardware and a software implementation, meaning that some operations may be implemented in dedicated circuitry and others in software.

In examples where the image processing stage 140 is comprised in the camera 110, the above-mentioned one or more processors and the computer-readable medium, and/or the dedicated circuitry implementing the image processing stage 140, may be comprised in the camera 110, e.g., as part of an (overall) image processing pipeline of the camera 110.

In examples where the image processing stage 140 is comprised in an external device, the above-mentioned one or more processors and the computer-readable medium, or the dedicated circuitry implementing the image processing stage 140, may be comprised in the external device, e.g., as processing blocks of a server-side image processing stage. In this case, it is noted that the camera 110 still may comprise an image processing pipeline, comprising some at least basic image processing stage to facilitate further transmission, storage, processing and other handling of captured image frames. For instance, the camera 110 may comprise a raw image conversion stage comprising a raw image demosaicing operation and/or noise reduction. To reduce the bandwidth requirements for transmitting image data (e.g., captured image frames 300) from the camera 110 to the external device, the camera 110 may additionally comprise an encoding block for encoding the image data prior to transmission to the remote device. The external device may in turn decode the encoded image data to provide decoded image data for further processing by the image processing stage 140.

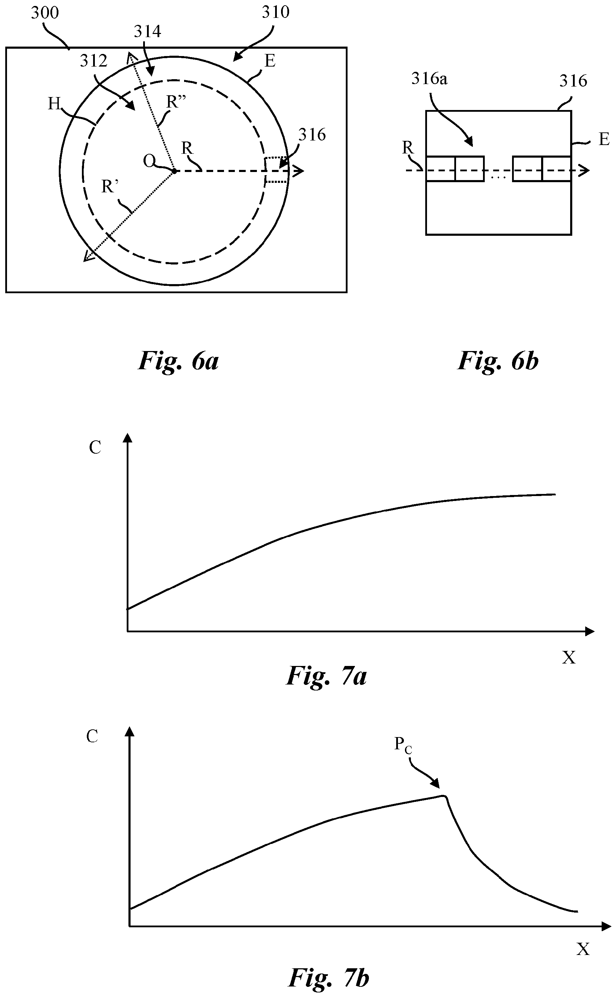

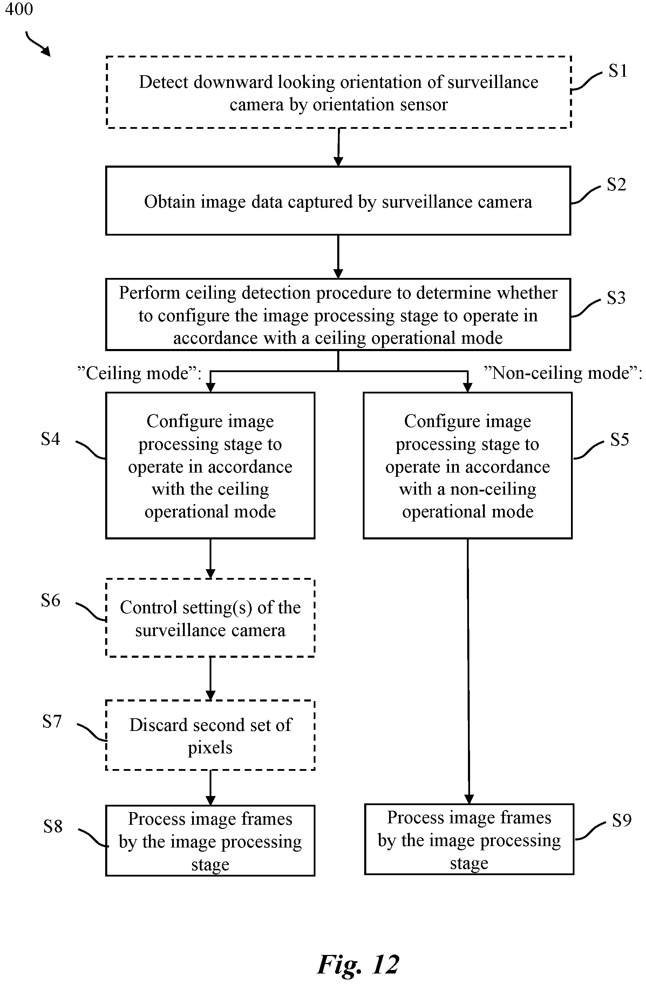

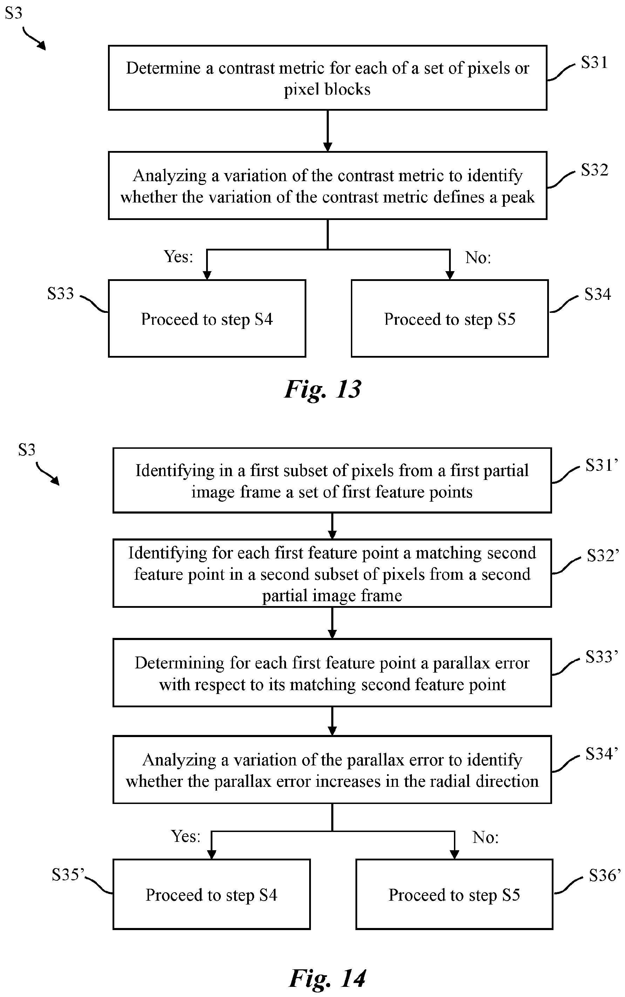

As mentioned above, the processing device 150 is configured to perform a method for controlling the image processing stage 140. More specifically, the processing device 150 is configured to implement an image processing-based approach for predicting whether the camera 110 is arranged in a ceiling-mounted configuration. Responsive to such a detection, the processing device 150 is configured to cause the image processing stage 140 to operate in accordance with a first operational mode, herein termed "ceiling operational mode", and otherwise in accordance with a second operational mode, herein termed "non-ceiling operational mode". This will in the following be described in greater detail, with reference to Fig. 4, in conjunction with Fig. 6a-b, 7a-b, and the flow charts of Fig. 12 and Fig. 13.

Fig. 6a is a schematic depiction of image data in the form of an image frame 300 captured by the camera 110 of the scene 10.

The camera 110 is in the illustrated example assumed to produce a circular image of exposed pixels 310, i.e., a circular image area 310 within a rectangular frame. The image or image area 310 is bounded by edge or perimeter pixels, indicated by solid line E. The edge pixels are the pixels imaging the scene at the maximum viewing angles within the FOV of the camera 110. The area of the image frame 300 outside the edge E is formed by pixels not being exposed. The image area 310 of the image frame 300 further comprises a first set of pixels or central pixels 312 depicting the central scene portion 10a, and a second set of pixels or peripheral pixels 314 depicting the peripheral scene portion 10b. The dashed line H indicates the location of the image of the horizon in the image frame 300, i.e., "the horizon pixels" corresponding to the boundary between the central pixels 312 and the peripheral pixels 314. The point O may correspond to an optical center of the image frame 300 and/or image area 310, coinciding with the optical axis O of the camera 110 and thus sharing the same reference sign.

The location of the horizon H in the image frame 300 (i.e., the coordinates of the horizon pixels) may be known a priori, for instance by determining which pixels of the image frame 300 correspond to a viewing angle of 90 degrees with respect to the optical axis O of the camera 110. Hence, the processing device 150, and optionally the image processing stage 140, may have access to predetermined horizon data (e.g., predetermined horizon coordinate data) indicating which pixels of the image frame 300 belong to / constitute the first set of pixels 312 and the second set of pixels 314, respectively. The horizon data may for instance indicate the coordinates of the horizon pixels, wherein pixels inside the horizon pixels may be associated with the first set of pixels 312 and pixels outside the horizon pixels may be associated with the second set of pixels 314. The horizon pixels may typically belong to the second set of pixels 314, however it is also possible to consider the horizon pixels as belonging to the first set of pixels 312.

While the illustrated example for simplicity shows the image frame 300 as comprising a circular image area 310, it is noted that fisheye lenses with other types of mappings also are possible, such as a cropped circle fisheye lens or a diagonal fisheye lens, as long as the (cropped) image area still depicts the horizon H and the peripheral scene portion 10b. The pixels of the image area 310 may also (e.g., as a pre-processing step of the camera 110) be mapped to cover the full area of the image frame 300, wherein the edge E of the image area 310 will be the edge of the image frame 300. In general, the present disclosure is applicable to any camera 110 having a fisheye lens or other lens arrangement with a FOV greater than 180 degrees, such that the image data 300 captured by the surveillance camera 110 when mounted in downward looking configuration, includes a first set of pixels 312 depicting a central scene portion 10a located below a horizon H, and a second set of pixels 314 depicting a peripheral scene portion 10b located above the horizon H.

Fig. 12 is a flow chart of a method 400 for controlling the image processing stage 140. Some steps of the method 400 (e.g., steps S1-S5) may be performed as part of an initialization procedure for the camera 110, for instance following installation or deployment of the camera 110. The initialization procedure may be triggered by an operator inputting an initialization signal, for instance via a dedicated button, switch or other actuator on the camera 110, or upon receiving an initialization signal from a remote controlling device (e.g., a server) over a communication network. The camera 110 may also be configured to automatically initiate the initialization procedure upon power up.

As mentioned in connection with Fig. 4, the camera 110 may comprise an orientation sensor 160. In this case, the method 400 may optionally comprise, as an initial step S1, detecting whether the camera 110 is in a downward looking configuration. This may be detected based on an orientation signal output by the orientation sensor 160. For instance, a downward looking configuration may be detected responsive to the orientation signal indicating that the camera 110 is oriented at an angle of 90 degrees (e.g., within some predetermined tolerance, such as ±5 or ±10 degrees) with respect to the horizontal plane. The detection may be performed by the orientation sensor 160 and a detection signal indicating that a downward looking orientation of the camera 110 has been detected may be supplied to the processing device 150 as a trigger for proceeding with the method 400. It is also possible to have the orientation sensor 160 output the orientation signal to the processing device 150, wherein the processing device 150 may perform the detection.

Responsive to detecting a downward looking orientation of the camera 110 at step S1, the method proceeds by the processing device 150 obtaining image data from the surveillance camera 110 (step S2). In the present example where the camera 110 comprises the fisheye lens 120 and a single image sensor 130, the image data is obtained in the form of an image frame 300 of the scene 10 captured by the image sensor 130. The processing device 150 may obtain the image frame 300 by outputting a control signal causing the camera 110 to capture an image frame 300. The image frame 300 may subsequently be provided to the processing device 150 for analysis. Where the processing device 150 is comprised in the camera 110, the image frame 300 may be stored in a memory or buffer of the camera 110 wherein the processing device 150 simply may read the image frame 300 therefrom. Where the processing device 150 is arranged in an external device (e.g., an external camera controller or server), the camera 110 may transmit the image frame 300 to the processing device 150 over a communication interface (e.g., a network).

At step S3, the processing device 150 performs a ceiling detection procedure comprising analyzing at least a subset of pixels of the second set of pixels 314 to determine whether to configure the image processing stage 140 to operate in accordance with a ceiling operational mode. More specifically, as will be further described in the below, by this analysis, the processing device 150 may accordingly estimate or predict whether the camera 110 is in a ceiling-mounted configuration, for instance as shown in Fig. 1, or as shown in Fig. 2 but arranged at a relatively small distance from the ceiling 12. This prediction may in turn be used as basis for determining the configuration of the image processing stage 140.

An approach for analyzing pixels at step S3 of the method 400, being applicable to image data captured by a single-sensor surveillance camera, such as the camera 110, will now be disclosed in detail with further reference to Fig. 7a-b and the flow chart of Fig. 13.

Fig. 7a-b are schematic diagrams of a contrast metric C determined for pixels of the second set of pixels 314 of the image frame 300 of Fig. 6a under two different mounting scenarios further discussed below. More specifically, with further reference to Fig. 6b, the contrast metric C is determined for each of a set of pixels or pixel blocks 316a of a subset of pixels 316 of the second set of pixels 314.

The set of pixels or pixel blocks 316a are distributed in a radial direction R (e.g., from the center O towards the edge E) of the image frame 300 at increasing distance from the horizon pixels H. The set of pixels of pixel blocks 316a are accordingly distributed between the horizon pixels H and the edge E of the image area 310. Thereby, a sequence of contrast metrics C may be determined, each contrast metric of the sequence being determined for a respective pixel or pixel block 316a of a corresponding sequence of pixels or pixel blocks 316a distributed in the radial direction R. Thus, Fig. 7a-b indicates how the contrast metric C of the pixels or pixel blocks 316a varies as a function of location X along the radial direction R. The location X may be for instance be expressed in terms of distance (pixel distance) from the horizon pixels H, or represent the position (index) of the contrast metric C in the sequence of contrast metrics (e.g., where a greater distance from the horizon pixels H corresponds to a later position in the sequence). Analogously, this means that each pixel or pixel block of the set of pixels or pixel blocks 316a, and its associated contrast metric C, corresponds to a respective viewing angle within the sub-range of viewing angles of the FOV of the camera 110 covering the peripheral scene portion 10b.

Whether to determine the contrast metric C for a set of individual pixels or a set of pixel blocks may depend on factors such as available computing resources, the number of contrast samples that are expected to enable a reliable analysis, etc. In case of a pixel block-based contrast metric C, analogous considerations apply to the dimensions and number of pixel blocks 316a. For instance, the pixel blocks 316a may have a dimension of 4x4 pixels, 16x16 pixels or greater, to mention a few non-limiting examples.

The contrast metric C of a respective pixel or pixel block 316a may be computed as fraction of: a difference between a pixel value of the respective pixel or pixel block and an average pixel value, and the average pixel value. The pixel value may be a pixel intensity (e.g., luminance). The average pixel value may be an average pixel value of the second set of pixels 314 or an average pixel value of the subset of pixels 316 comprising the set of pixels or pixel blocks 316a. In case the contrast metric C is determined for a respective pixel, the pixel value may be the pixel value of the respective pixel. In case the contrast metric C is determined for a pixel block, the pixel value of the pixel block may be a representative pixel value of the pixel block, such as an average pixel value of the pixel block, or a single sampled pixel value of the pixel block. In case of a pixel block-based contrast metric C, the contrast metric C of a respective pixel block 316a may also be computed as a local contrast metric C of the respective pixel block 316a, i.e., a fraction of: a difference between a representative pixel value of the respective pixel block and an average pixel value of the respective pixel block, and the average pixel value of the respective pixel block. The representative pixel value of the respective pixel block may in this case be a single sampled pixel value of the pixel block (e.g., the pixel value of a center pixel of the pixel block).

In case the peripheral scene portion 10b includes a ceiling, the contrast may by way of example be defined by structural features (e.g., beams, light sources, ceiling tiles, etc.), and/or by local variations in texture in the ceiling. Typically, even a ceiling with a relatively uniform visual appearance may produce a varying contrast at the pixel level.

Fig. 7a shows the contrast metric C (e.g., computed in accordance with any one of the approaches set out above) when the peripheral scene portion 10b does not include a ceiling. Fig. 7b shows the contrast metric C when the peripheral scene portion 10b includes a ceiling 12. That is, Fig. 7a may correspond to the scenario shown in Fig. 3. Fig. 7b may correspond to a ceiling-mounted configuration as shown for instance in Fig. 1.

In each diagram, the horizon H coincides with the C-axis. In each case, it is expected that the contrast metric C as shown will be low for the pixels depicting the horizon H as it is located at infinity. At greater viewing angles (e.g., farther from the horizon H, towards the edge E) the contrast metric C is expected to gradually increase as the distance to imaged objects will decrease and hence gradually will approach the DOF of the camera 110. In case the peripheral scene portion 10b does not include a ceiling, the contrast metric C may continue to increase to reach a maximum at the maximum viewing angle, or plateau. A plateau may for instance appear if the camera 110 (e.g., as in Fig. 3) is mounted on a pole outside and the peripheral scene portion 10b depicted in the image frame 300 includes a cloudless or overcast sky (which may tend to have a low contrast). A maximum contrast metric C at the maximum viewing angle may on the other hand for instance appear if the camera 110 (e.g., as in Fig. 2) is suspended at a distance underneath a ceiling 12 which is close to, or falls within the DOF of the camera 110. However, as shown in Fig. 7b, if the camera 110 is mounted flush against or close to the ceiling 12 (e.g., as in Fig. 1), the pixels depicting the scene at the most extreme viewing angles (i.e., the edge pixels E) will tend to be out of focus and hence produce a low contrast metric C.

Hence, the above discussed scenarios tend to result in different variations of the contrast metric C. Therefore, it may be determined whether the camera 110 is in a ceiling-mounted configuration by analyzing a variation of the contrast metric C in the radial direction R. In particular, as shown in Fig. 7b, mounting the camera 110 flush against or close to the ceiling 12 tends to result in a peak Pc of the contrast metric C. Hence, it may be determined whether the second set of pixels 314 depicts the ceiling 12 by detecting whether the variation of the contrast metric C in the radial direction R defines a peak Pc.

Accordingly, as shown in Fig. 13, the ceiling detection procedure performed at step S3 may comprise a number of sub-steps.

At step S31, the processing device 150 determines a contrast metric C for each of a set of pixels or pixel blocks 316a of the second set of pixels 314 using any one of the approaches set out above.

At step S32, the processing device 150 analyzes a variation of the contrast metric C in the radial direction R to identify presence of a peak Pc. More specifically, the analysis may comprise identifying whether the sequence of contrast metrics C comprises a peak Pc.

For instance, the processing device 150 may determine presence of a peak Pc responsive to identifying at least one pixel or pixel block 316a for which the contrast metric C exceeds the contrast metric C for one or more neighboring pixel of pixel blocks 316a on each side (e.g., both closer to and farther from the horizon pixels, or correspondingly, both earlier and later in the sequence of contrast metrics C) by at least a threshold amount. For an increased robustness, such peak may be considered as a candidate peak and be subjected to additional conditions to be conclusively considered as an identified peak Pc. For instance, a candidate peak may be conclusively considered as an identified peak Pc only if one or more of the following conditions are met: it defines a global maximum of the sequence of contrast metrics C; it has a contrast metric C exceeding a global threshold or differing from a global minimum of the sequence of contrast metrics C by at least a threshold amount; a rate of increase of the sequence of curvature metric C on either side of the candidate peak exceeds a rate threshold.

In a further example, the peak detection may for instance be realized by identifying pixels or pixel blocks 316a for which the derivative of the curvature metric C as function of location X (dC/dX) has a zero crossing. Each zero crossing may be considered as a candidate peak. To reduce the risk of minor and/or slow variations producing false positives, one or more filtering steps may be applied. For instance, also the second order derivative may be computed of the curvature metric C as function of location X (d²C/dX²) and zero crossings with an absolute valued second order derivative smaller than a threshold may be excluded. Further, a local height of the candidate peak at each zero crossing may be calculated and candidate peaks with a local height smaller than a threshold may be excluded. The local height of a candidate peak may be computed by subtracting a curvature metric C of a local surrounding to the candidate peak from the maximum value of the candidate peak (i.e., the curvature metric C at the location X corresponding to the zero crossing).

The peak identification algorithms discussed above are merely examples, and any other algorithm for identifying presence of peaks in a 1D data set may be used.

While in Fig. 6b, the pixels or pixel blocks 316a are shown to be contiguous, the set of pixels or pixel blocks 316a for which the contrast metric C is determined may also be distributed more sparsely, such that subsequent pixels or pixel blocks are spaced apart by a number of pixels in the radial direction R. It is further noted that it in general is not necessary to determine the sequence of contrast metrics C to span the full distance from the horizon pixels H to the edge E in the radial direction R. Rather, the contrast metric C may for instance be determined for pixels of pixel blocks 316a distributed over only a part of the distance, such as a major part of the distance. However, the contrast metric C may advantageously be determined for pixels of pixel blocks 316a distributed both in front of and behind the focus distance of the camera 110, such that presence of a peak Pc in the sequence of contrast metrics C may be detected.

Responsive to the processing device 150 identifying a peak Pc (e.g., at least one peak remaining after filtering), the method 400 proceeds according to the "Yes" branch at step S33. In response to the processing device 150 not identifying any peak Pc in the curvature metric C, the method 400 proceeds according to the "No" branch at step S34.

With reference again to Fig. 12, there are shown method steps of a "Ceiling mode" branch and a "Non-ceiling mode" branch, respectively. The method 400 proceeds according to the Ceiling mode branch if it at step S3 / S33 a peak Pc is identified. At S4 of the Ceiling mode branch, the processing device 150 thus configures the image processing stage 140 to operate in accordance with the ceiling operational mode. The method 400 proceeds according to the Non-ceiling mode branch if it at step S3 / S34 no peak Pc is identified. At S5 of the Non-ceiling mode branch, the processing device 150 configures the image processing stage 140 to operate in accordance with the non-ceiling operational mode.

After configuring the image processing stage 140 at S4 or S5, the initialization procedure may be concluded. The camera 110 may then enter a monitoring operation wherein the camera 110 may proceed to monitor the scene 10 by capturing image frames 300 of the scene 10. The captured image frames 300 may be provided to the image processing stage 140 to be subjected to its at least one image processing operation (e.g., 141, 142,..., 14n as shown in Fig. 5) to provide processed image frames 301, e.g. as discussed above in the form of a video stream. That is, the image processing stage 140 will process each image frame 300 captured by the camera 110 during monitoring operation, subsequent to configuring the image processing stage 140. Each such image frame 300 will in the following be referred to as a subsequently captured image frame, or interchangeably "captured image frame". It is noted that each captured image frame 300 will have a content corresponding to the image frame 300 as shown in Fig. 6a, and thus comprise a first set of pixels 312 depicting the central scene portion 10a and a second set of pixels 314 depicting the peripheral scene portion 10b. Hence, Fig. 6a and the reference signs therein will be used also with reference to the subsequently captured image frames 300.

According to the Non-ceiling mode branch, at step S5, the processing device 150 configures the image processing stage 140 to operate in accordance with the non-ceiling operational mode. The non-ceiling operational mode implies that the image processing stage 140 is configured to apply each of the at least one image processing operation 141, 142, 142n to both the first set of pixels 312 and the second set of pixels 314 of each respective subsequently captured image frame 300 (step S9). Thus, each processed image frame 301 output by the image processing stage 140 will include processed first and second sets of pixels corresponding to the first and second sets of pixels 312, 314. If the image processing stage 140 includes an image analysis operation, such as object detection and/or object tracking, the image analysis operation may involve analysis of both the first and second sets of pixels 312, 314. For instance, objects may thus be detected and/or tracked also within the peripheral scene portion 10b. In a sense, this means that in the non-ceiling operational mode, the image processing stage 140 basically operates as it would in a conventional implementation, i.e., processing each captured image frame 300 in its entirety.

In contrast, according to the Ceiling mode branch, at step S4, the processing device 150 configures the image processing stage 140 to operate in accordance with the ceiling operational mode. The ceiling operational mode implies that the image processing stage 140 is configured to apply each of the at least one image processing operation 141, 142, 142n to the first set of pixels 312 of each respective captured image frame 300 but not to the second set of pixels 314 of the respective captured image frame 300 (step S8). The second set of pixels 314 are hence excluded from processing by the at least one image processing operation 141, 142, 142n such that the at least one image processing operation 141, 142, 142n is applied selectively / only to the first set of pixels 312. Hence, processing of the second set of pixels 314 (which in this case includes ceiling pixels) may be avoided. Accordingly, each processed image frame 301 output by the image processing stage 140 will in this case include processed pixels corresponding only to the first set of pixels 312.

If the image processing stage 140 includes an image transform operation and/or an encoding operation, the image transform operation and/or the encoding operation may be applied only to the first set of pixels 312. The output of such an operation may accordingly include only processed counterparts to the first set of pixels 312, and thus include no data derived from or corresponding to the second set of pixels 314.

If the image processing stage 140 includes an image analysis operation, such as object detection and/or object tracking, the image analysis operation may involve analysis of only the first set of pixels 312. For instance, objects may thus be detected and/or tracked only within the central scene portion 10a.

In either case, the Ceiling mode branch of the method may optionally comprise a step S7 of discarding the second set of pixels 314 of each captured image frame 300. The discarding step may for example be performed by a pixel discard or cropping block, arranged at an input of the image processing stage 140, e.g., upstream (i.e., prior to) a first image processing operation 141 of the image processing stage 140. It is also possible to implement the discarding step by configuring at least a first one of the image processing blocks 141, 142, 14n to (when in the ceiling operational mode) ignore or skip the second set of pixels 314 and output image data comprising only processed counterparts to the first set of pixels 312. It is also possible to configure the processing device 150 as a relay of captured image frames 300 between the image sensor 130 and the image processing stage 140. In this case, the discarding step S7 may instead be performed by the processing device 150, which accordingly may forward cropped image frames 300, including only the first set of pixels 312 and omitting the second set of pixels 314, to the image processing stage 140, thereby configuring the image processing stage 140 to operate in the ceiling operational mode by means of providing cropped image frames 300 to the image processing stage 140.

It is noted that the at least one image processing operation 141, 142, 14n discussed above, each refers to image processing operations of the image processing stage 140 whose processing is responsive to the ceiling and non-ceiling mode configuration of the image processing stage 140. However, it is not precluded that the system includes one or more further image processing operations which are "statically" configured, i.e., whose processing is independent from the operational mode of the image processing stage 140. One non-limiting example of such an image processing operation may be one or more operations of a raw image conversion. As one non-limiting example, subjecting the full captured image frames 300 to raw conversion may facilitate the image processing of the image-based ceiling detection performed by the processing device 150, as well as subsequent operations of the image processing stage 140 and computation of pixel statistics (discussed below).

In addition to configuring the image processing stage 140, it is further possible to control one or more settings of the camera 110 responsive to the ceiling detection procedure. Accordingly, the method 400 may at optional step S6 of the Ceiling mode branch (which hence is performed responsive to configuring the image processing stage 140 in accordance with the ceiling operational mode) comprise controlling a first setting of the camera 110 based on a first pixel statistics, wherein the first pixel statistics is based on pixels depicting the central scene portion 10a but not pixels depicting the peripheral scene portion 10b. Hence, pixels depicting the peripheral scene portion 10b may be ignored / excluded from consideration also for the purpose of controlling a first setting of the camera 110. The first setting here refers to a setting used by the camera 110 during capturing of the image frames 300 during monitoring operation, i.e. at step S8.

The first setting of the camera 110 may be a setting of one or more exposure-related control parameters of the camera 110 (e.g., shutter speed, aperture, ISO value and/or camera lighting). The first pixel statistics may be indicative of lighting condition in the central scene portion 10a. The first pixel statistics may be based on an intensity (e.g., a luminance) of the pixels depicting the central scene portion 10a. As mentioned above, in the ceiling-mounted configuration the peripheral scene portion 10b may be relatively bright, and, often, include light sources. Hence, controlling exposure-related control parameters based on pixels depicting the peripheral scene portion 10b (and hence the ceiling 12) may result in an exposure setting of the camera 110 being unsuitable or at least sub-optimal for the lighting condition in the central scene portion 10a, e.g., such that the first set of pixels 312 of captured image frames 300 on average become underexposed. However, by excluding the second set of pixels 314 depicting the peripheral scene portion 10b from the derivation of the first pixel statistics, a better exposure of the first set of pixels may be obtained.

An example of a further (first) setting of the camera 110 which may be set based on a first pixel statistics determined while excluding pixels depicting the peripheral scene portion 10b is white balance. Hence, a white balance may be set while avoiding undesired biasing introduced by any ceiling pixels.

The first pixel statistics referred to above, may each be determined based on the respective first set of pixels 312 of one or more of the subsequently captured image frames 300, i.e. image frames 300 which will be processed by the image processing stage 140 to processed image frames 301. However, the first pixel statistics may also be determined based on a first set of pixels of one or more dedicated measurement image frames captured by the camera 110 of the scene 10. The image frame 300 as shown in Fig. 6a is representative also of such a measurement image frame. The measurement image frame(s) may be captured interleaved with the image frames 300 for the purpose of collecting one or more pixel statistics to facilitate control of the camera 110.

Additionally or alternatively, the method 400 may at step S6 comprise controlling a second setting of the camera 110 based on a second pixel statistics, wherein the second pixel statistics is based on pixels depicting the peripheral scene portion 10b but not pixels depicting the central scene portion 10a. Hence, pixels depicting the peripheral scene portion 10b may be used for the purpose of controlling some camera settings of the camera 110. The second setting here refers to a setting used by the camera 110 during capturing of the image frames 300 during monitoring operation, i.e. at step S8.

The second setting of the camera 110 may be a setting of a frame rate of capturing the image frames 300. The second pixel statistics may be indicative of a frequency of a temporal variation of a lighting condition in the peripheral scene portion 10b. The second pixel statistics may be based on an intensity (e.g., a luminance) of the pixels depicting the peripheral scene portion 10b. Where the ceiling 12 includes light sources, a flickering of the light sources may have an adverse effect on the image quality. Hence, by controlling a frame rate of the capturing of the image frames 300 based on pixels depicting the peripheral scene portion 10b, the capturing process may be controlled so as to reduce an impact on flickering lights in the peripheral scene portion 10b. By excluding pixels depicting the central scene portion 10a from the derivation of the second pixel statistics, the amount of pixel data to process to detect flickering lights may be reduced.

Analogous to the above discussion of the first pixel statistics, the second pixel statistics may be determined based on the respective second set of pixels 314 of a sequence of subsequently captured image frames 300, i.e. image frames 300 which will be processed by the image processing stage 140 to processed image frames 301, or a sequence of measurement image frames.

It is further envisaged that while the image processing stage 140 operates in the ceiling operational mode, the method may further comprise determining additional pixel statistics, such as third pixel statistics based on pixels depicting the peripheral scene portion 10b but not pixels depicting the central scene portion 10a. The pixels may here be either the second set of pixels 314 of captured image frames 300 or of measurement image frames. The third pixel statistics need not be used for controlling the camera 110, like in the above examples. Instead, the third pixel statistics may be output as diagnostics data. In one example, the third pixel statistics may be indicative of a trend of temporal variation of a pixel intensity of one or more pixels of the second set of pixels of each image frame of a sequence of image frames captured by the camera 110. For instance, dirt may over time accumulate on the lens(es) and/or image sensor(s) of the camera 110, leading to degradation of overall image quality. By monitoring a trend of pixel intensities of one or more of the second set of pixels in image frames captured over a period of time (such as over the course of days, weeks, months, etc.), such degradation may be detected and indicted in diagnosis data.

The computation of the different pixel statistics discussed above, and (where applicable) the associated control of a camera setting, may be performed by the processing device 150. However, the pixel statistics may also be computed by a separate pixel statistics block comprised in the camera 110. This may be useful for instance if the processing device 150 is arranged external to the camera 110.

To further improve the reliability of the ceiling detection procedure, in particular to reduce a risk of false positives (i.e., erroneously predicting that the camera 110 is in a ceiling-mounted configuration), the contrast-based analysis discussed above may be applied in more than one direction. For instance, step S3 of the method 400 of Fig. 12 may comprise performing steps S31-S32 of the flow chart of Fig. 13 for a respective set of pixels or pixel blocks in one or more further radial directions. For instance, steps S31-S32 may be performed for two or more sets of pixels or pixel blocks located along two or more radial directions, such as along two or more of radial directions R, R' and R" indicated in Fig. 6a. The processing device 150 may then determine to configure the image processing stage 140 to operate according to the ceiling operational mode if a peak is Pc detected in at least a predetermined minimum number of the radial directions, such as in at least a majority of the radial directions, or in all radial directions.

The operations of the processing device 150 disclosed in the above, and in the below, may, analogous to the image processing device 140, be implemented in both hardware (e.g., in one or more integrated circuits such as ASICs or FPGAs) and software (e.g., as computer program code instructions stored on a non-transitory computer-readable medium performed by one or more processors of the processing device 150).

In the above discussion of the contrast metric-based approach, reference has for simplicity been made mainly to the mounting configurations of Fig. 1 and Fig. 3, respectively. However, as previously indicated, it may be useful to apply the ceiling operational mode also where the camera 110, like in Fig. 2, is suspended from the ceiling 12, however at a relatively short distance such that the peripheral scene portion 10b mainly comprises the ceiling 12. As may be understood from the above discussion of Fig. 7a-b, if the camera 110 is mounted as in Fig. 2, the greater the distance to the ceiling 12, the more the variation of the contrast metric will resemble that of Fig. 7a. Conversely, the smaller the distance to the ceiling 12, the more the variation of the contrast metric will resemble that of Fig. 7b. Parameters of the peak identification that may be used to adjust the decision point for the method (i.e., what to consider as a peak Pc in the sequence of contrast metrics C) include for instance the various thresholds discussed in connection with the peak identification algorithms. For instance, by adjusting one or more parameters (e.g., thresholds) such that the peak identification algorithm is more inclusive and thus may consider also more slowly varying contrast metrics C (i.e., wider peaks) as a peak Pc, the ceiling operational mode may be applied also in mounting configurations where the camera 110 is mounted at a greater distance from the ceiling 12.

Fig. 8 shows a block diagram of a system 200, corresponding to the system 100 of Fig. 4, however differing in that it instead of the single-sensor camera 110 comprises a (surveillance) camera 210 of a multi-sensor implementation. The camera 210 thus comprises a lens arrangement 220 and at least a first and second image sensor 231, 232, 233, each arranged behind a respective lens 221, 222, 223 of the lens arrangement 220 such that each image sensor 231, 232, 233 depicts a portion of the scene 10 from a respective viewpoint. The lens arrangement 220 and the image sensors 231, 232, 233 may be arranged behind a transparent cover 212 (which for instance may be dome-shaped). While the illustrated example depicts three lenses 221, 222, 223 and image sensors 231, 232, 233, this is merely one example and other configurations are also possible, such as only two lenses and two image sensors, or four lenses and four image sensors, or more. In any case, each lens and associated image sensor ("lens-image pair") may have a respective partial FOV corresponding to a part of a full FOV of the camera 210. The lens-image pairs may be arranged such that the respective partial FOVs of adjacent lens-image pairs partially overlap, and such that the lens-image pairs collectively define the full FOV exceeding 180 degrees. Reference sign O here indicates the common optical axis of the combined optical system of the lens-image pairs of the camera 210.

During operation, the image sensors 231, 232, 233 may each capture a respective partial image frame 321, 322, 323 depicting a respective portion of the scene 10, such that the partial image frames 321, 322, 323 collectively covers the full FOV of the camera 210. The image data 320 captured by the camera 210 at each capture occasion accordingly comprises each of the partial image frames 321, 322, 323. During monitoring operation, the partial image frames may thus, as per se is known in the art, be merged into a composite image frame using image stitching. The image stitching may be performed by a stitching block 260. As indicated in Fig. 8, the stitching block 260 may be arranged upstream the image processing stage 140 or, optionally, be arranged as an image processing block 260 of the image processing stage 140. These implementation options will be further discussed below.

Fig. 9 schematically shows an example of such a composite image frame 330, formed by stitching partial image frames captured by respective image sensors of the camera 210. In the illustrated example, the composite image frame 330 is formed of first, second and third partial image frames 321, 322, 323 captured by the first, second and third image sensors 231, 232, 233, respectively, and further of a fourth partial image frame 324 captured by a respective fourth image sensor of the camera 210, not shown in Fig. 8 for illustrative clarity. Each of the first, second and third image sensors 221, 222, 223, and the further fourth image sensor has in the illustrated example a respective partial FOV covering roughly a respective quadrant of the scene 10 (as viewed in a horizontal plane), with some degree of overlap with its neighboring image sensors.

The depiction of the scene 10 in the composite image frame 330 is in the illustrated example shown to cover the full rectangular area of the image frame 330. However, it is also possible to form a composite image frame 330 depicting the scene within an image area covering only part of the image frame 330, for instance a circular image area as in Fig. 6a. That is, the shape and dimensions of the image area depicting the scene 10 may vary with the type of stitching algorithm used to form the composite image frame 330.

Analogous to the image frame 300 of Fig. 6a, the composite image frame 330 comprises a first set of pixels or central pixels 331 depicting the central scene portion 10a, and a second set of pixels or peripheral pixels 332 depicting the peripheral scene portion 10b. The dashed line H indicates the location of the image of the horizon in the composite image frame 330, i.e., "the horizon pixels" corresponding to the boundary between the central pixels 331 and the peripheral pixels 332. The point O may further correspond to an optical center of the composite image frame 330, coinciding with the common optical axis O of the camera 210 and thus sharing the same reference sign.

The reference signs 321, 322, 323, 324 generally point to the respective portions of the composite image frame 330 to which the pixels of the respective partial image frames 321, 322, 323, 324 contribute. More specifically, the portion (sector) of the composite frame 330 indicated by reference sign 321 and delimited by dotted lines includes pixels from the first partial image frame 321. The portion indicated by reference sign 322 and delimited by the dash-dot-dotted lines include pixels from the second partial image frame 322. The portion indicated by reference sign 323 and delimited by the dash-dotted lines include pixels from the third partial image frame 323. The portion indicated by reference sign 324 and delimited by the dashed lines include pixels from the fourth partial image frame 324.

The hatched regions indicate portions of the composite image frame 330 based on pixels from overlapping partial image frames. For instance, the hatched region 334 indicates a portion of pixels based on pixels from overlapping portions of the first partial image 321 and the second partial image frame 322. For instance, in the region 334, the pixels of the composite image frame 330 may be formed by blending, or in some other way combining, pixels of the overlapping portions of the first and second partial image frames 321, 322. The blending or combination may be performed with an aim of producing a seamless transition between the partial image frames 321, 322, ideally without any stitching errors. This applies correspondingly to each of the further hatched regions and the associated partial image frames. While in Fig. 9, the blended / combined regions extend from the center O towards an approximate mid-point of a respective side of the rectangular image frame 330, this is merely an example and the extension and orientation of the regions will in general depend on the mapping used when stitching the partial image frames 321, 322, 323, 324 and on how the stitched image data is cropped.

The method 400 of Fig. 12 as described above with reference to the camera 110 of Fig. 4 may be applied in a corresponding manner to control the image processing stage 140 of the camera 210 of Fig. 8. Accordingly, steps S2-S5 (and the optional step S1) of the method 400 may be performed as part of an initialization procedure for the camera 210. Thus, at S2 of the method 400, the processing device 150 may obtain image data from the camera 210 (for instance responsive to detecting a downward looking orientation of the camera 210 using the orientation sensor 160). Further, at S3, the ceiling detection procedure may be performed, comprising analyzing pixels of the image data in accordance with the contrast-based approach described with reference to Fig. 13. The obtained image data may in this case comprise one or more of the partial image frames 231, 232, 233, 234, or a composite image frame 330 as shown in Fig. 9 and generated by the stitching block 260. Accordingly, in the former case the second set of pixels analyzed at S3, and the sub-steps S31-34, may be a second set of pixels of any one of the partial image frames 231, 232, 233, 234 depicting a respective portion of the peripheral scene portion 10b. That is, a contrast metric C may at S31 be determined for each of a set of pixels or pixel blocks of the second set of pixels of a partial image frame (e.g., any one of the partial image frames 231, 232, 233, 234) distributed in a respective radial direction R of the respective partial image frame, with increasing distance from horizon pixels of the respective partial image frame. Alternatively, in the latter case, a contrast metric may at S31 be determined for each of a set of pixels or pixel blocks of the second set of pixels 332 of a composite image frame 330 distributed in a radial direction R of the composite image frame 330, with increasing distance from horizon pixels H of the composite image frame 330. In either case, responsive to identifying that the variation of the determined contrast metrics defines a peak P_{c}, the image processing stage 140 may at S4 be configured to operate in accordance with a ceiling operational mode. Responsive to not identifying any peak P_{c}, the image processing stage 140 may instead at S5 be configured to operate in accordance with non-ceiling operational mode. The method 400 may thereafter proceed in accordance with the "Ceiling mode" or "Non-ceiling mode" branches as set out above.

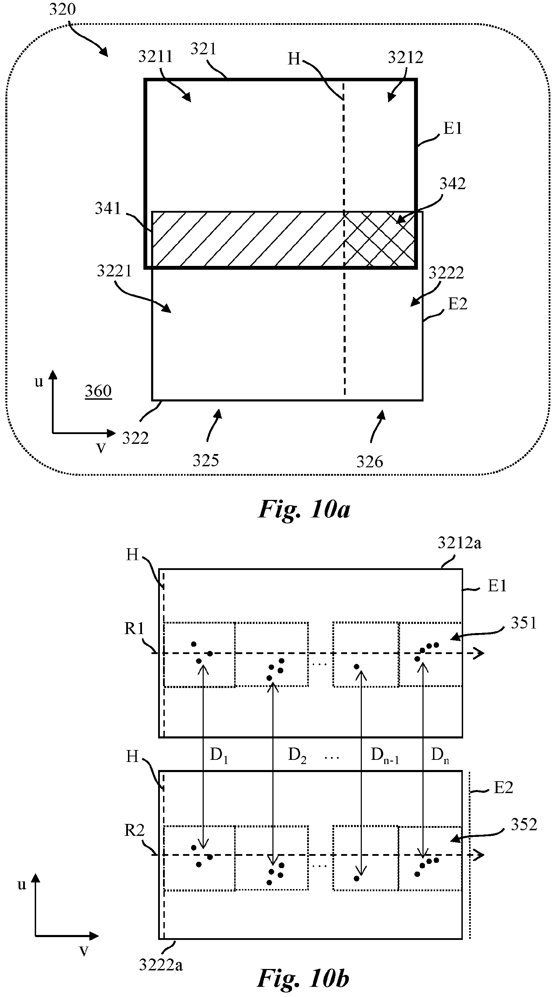

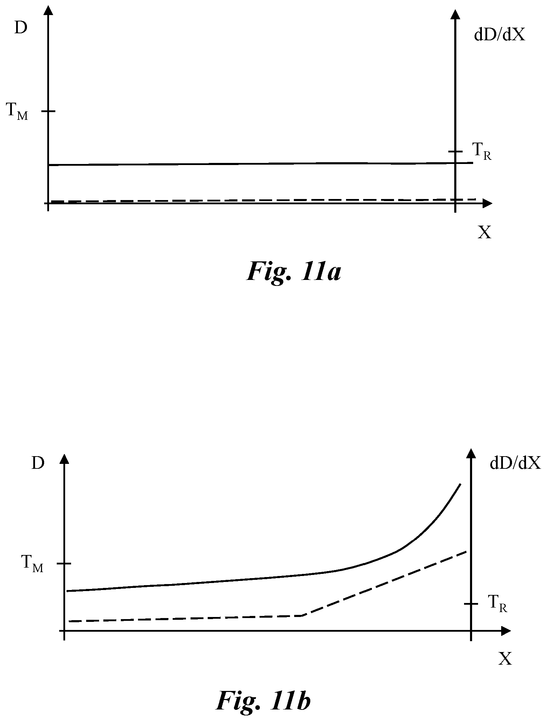

Due to the differing viewpoints of the image sensors of the camera 210, parallax will occur between their respective partial views. As realized by the inventor, this enables an alternative to the above-described contrast-based approach for analyzing image data at step S3 of the method 400, namely a parallax-based approach. This approach will in the following be described with reference to Fig. 8, and further with reference to Fig. 10a-b, 11a-b, and the flow charts of Fig. 12 and 14. The approach will be described with reference to first and second partial image frames 321, 322 captured by the first and second image sensors 231, 232, respectively. However, the approach is applicable to any overlapping pair of image frames captured by a pair of image sensors of the camera 210.

At S2, the processing device 150 obtains image data 320 comprising first and second partial image frames 321, 322 captured by the first and second image sensors 231, 232.

Fig. 10a shows in a schematic manner the first and second partial image frames 321, 322 of the image data 320 obtained by the processing device 150. The dashed line H indicates the location of the horizon pixels in the first and second partial image frames 321, 322. Reference signs E1 and E2 denote a respective edge of the first and second partial image frames 321, 322. Reference signs R1 and R2 denote a respective radial direction of the first and second partial image frames 321, 322. The radial directions R1, R2 may extend from a respective optical center to the respective edges E1, E2 of the first and second partial image frames 321, 322.

The first and second partial image frames 321, 322 each comprises a respective first set of pixels 3211, 3221 depicting a respective portion of the central scene portion 10a, and a respective second set of pixels 3221, 3222 depicting a respective portion of the peripheral scene portion 10b. Thus, the image data 320 comprises a first set of pixels 325 depicting the central scene portion 10a and comprising the first sets of pixels 3211, 3221 of the first and second partial image frames 321, 322, respectively, and a second set of pixels 326 depicting the peripheral scene portion 10b and comprising the second sets of pixels 3212, 3222 of the first and second partial image frames 321, 322, respectively.

In Fig. 10a the first and second partial image frames 321, 322 are shown in an aligned state. More specifically, the first and second partial image frames 321, 322 have been mapped to a common compositing surface 360 such that the respective partial views depicted in the first and second partial image frames 321, 322 are aligned. The first and second partial image frames 321, 322 have thus been mapped to a common coordinate system of the compositing surface 360, schematically represented by axes (u,v) in Fig. 10a.

The hatched region 341 indicates the pixels of the first and second partial image frames 321, 322 depicting overlapping portions of the scene 10. The further hatched region 342, being a sub-region of the region 341, indicates the respective subsets of pixels of the first and second partial image frames 321, 322 depicting overlapping portions of the peripheral scene portion 10b. That is, the respective subsets of pixels within the region 342 are formed by the pixels of the first and second partial image frames 321, 322 which depict a portion of the peripheral scene portion 10b and are mapped to a same set of coordinates on the compositing surface 360. These respective subsets of pixels of the first and second partial image frames 321, 322 are in the following referred to as a first and second subset of pixels 3212a, 3222a, respectively (shown in Fig. 10b). It follows from the above that the first and second subset of pixels 3212a, 3222a form part of the second set of pixels 326 of the image data 320.

As schematically indicated by the displacement between the edges E1 and E2 of the respective partial image frames 321, 322, alignment of their respective partial views need not result in an alignment of their respective edges E1, E2.

The compositing surface 360 may for instance be defined as a spherical or cylindrical surface, typically defined to be located at infinite distance from the camera 210. The compositing surface 360 may typically be a same compositing surface as used by the stitching operation 260 during monitoring operation for stitching partial image frames 321, 322, 323, 324 captured by the camera 210, to form a stitched image frame 330 as shown in Fig. 9.

The mapping of the pixels of the first and second partial image frames 321, 322 to the compositing surface 360 may be based on a spatial relationship between the respective partial FOVs of the first and second image sensors 231, 232. If the arrangement of the first and second image sensors 231, 232 is fixed, the mapping may be predetermined, for instance by the manufacturer during assembly of the camera 210. The mapping may in this case be realized as a look-up-table defining a mapping between each pixel coordinate of each partial image frame 321, 322 and the coordinate system (u,v) of the compositing surface 360. The look-up-table may be stored as part of configuration information that the processing device 150 may obtain (e.g., by retrieving it from a memory area of the camera 210 or stitching block 260). If the image sensors 231, 232 are motorized so as to be movable in relation to the scene 10 (e.g., by being rotated around the optical axis O of the camera 210), the mappings may be based on pose data indicating a current spatial configuration of the respective image sensors 231, 232. The spatial configuration may be expressed relative the coordinate system (u,v), or relative an external spatial frame of reference with a pre-defined relationship to the coordinate system (u,v). The pose data may for instance be provided by a motor controller of the camera 210, indicating a current pose of each image sensors 231, 232.

Analogous to the discussion of the image frame 300 of Fig. 6a, the processing device 150 may have access to horizon data indicating for each of the first and second partial image frames 321, 322 the location of their respective horizon pixels H. The processing device 150 may thus determine which pixels of the first and second partial image frames 321, 322 belong to the respective second sets of pixels 3212, 3222. The horizon data may for instance indicate the coordinates of the horizon pixels H in the first and second partial image frames 321, 322, wherein pixels radially outside the respective horizon pixels H may be associated with the respective second sets of pixels 3212, 3222.

The processing device 150 may thus determine or identify the first and second subsets of pixels 3212a, 3222a by mapping the first and second partial image frames 321, 322, or only the respective second sets of pixels 3212, 3222, to the compositing surface 360, and subsequently determining the first and second subsets of pixels 3212a, 3222a as the pixels of the second sets of pixels 3212, 3222 of the first and second partial image frames 321, 322 which overlap each other when mapped to the compositing surface 360 (i.e., are mapped to the region 342).

Subsequent to obtaining the image data 320, the processing device 350, at step S3, proceeds to perform the ceiling detection procedure by analyzing the first and second subset of pixels 3212a, 3222a of the second set of pixels 326 to determine whether to configure the image processing stage 140 to operate in accordance with the ceiling operational mode. The analysis at step S3 comprises a number of sub-steps, to be described with further reference to Fig. 10b and the flow chart of Fig. 14.

At step S31' of Fig. 14, and as shown in Fig. 10b, a set of first feature points 351 is identified in the first subset of pixels 3212a. The set of first feature points 351 are distributed in the radial direction R1 with increasing distance from the horizon pixels H in the first partial image frame 321.

At step S32', and as shown in Fig. 10b, a matching second feature point 352 is subsequently identified in the second subset of pixels 3222a for each first feature point 351. Thus, by steps S31' and S32', a sequence of matching pairs of first and second feature points may be determined. The second feature points 352 may, like the first feature points 351, be distributed in a radial direction R2 of the second partial image frame 322, at increasing distance from horizon pixels H of the second partial image frame 322.

A greater distance between a first feature point 251 and the horizon pixels H of the first partial image frame 321 implies that the first feature point 251 is located at a greater viewing angle within both the partial FOV of the first image sensor 231 and the full FOV of the camera 210. Analogously, a greater distance between a second feature point 252 and the horizon pixels H of the second partial image frame 322 implies that the second feature point 252 is located at a greater viewing angle within both the partial FOV of the second image sensor 232 and the full FOV of the camera 210. Hence, the first feature points 251 are distributed over a sub-range of viewing angles of the partial FOV of the first image sensor 231, the second feature points 252 are distributed over a sub-range of viewing angles of the partial FOV of the second image sensor 232, and the first and second feature points are distributed over a sub-range of viewing angles of the FOV of the camera 210. More specifically, the respective sub-ranges here refers to sub-ranges of viewing angles above the horizon H.

The first feature points 351 may for example be identified by analyzing a set of pixel blocks (indicated by dotted outline in Fig. 10b) of the first subset of pixels 3212a of the first partial image frame 321 distributed in the radial direction R1 with increasing distance from the horizon pixels H of the first partial image frame 321. In each pixel block, one feature point or a group of feature points may be identified. For instance, each pixel block may be analyzed using an edge detection algorithm, a corner detection algorithm, or scale-invariant feature transform (SIFT), to identify feature points therein. In case the peripheral scene portion 10b includes a ceiling, the feature points 351 may by way of example be defined by structural features (e.g., beams, light sources, ceiling tiles, etc.), and/or by local variations in texture in the ceiling. The analyzed pixel blocks of the first subset of pixels 3212a may be contiguous, or distributed more sparsely, such that subsequent pixel blocks are spaced apart by a number of pixels in the radial direction R1. The dimension of the analyzed pixel blocks of the first subset of pixels 3212a may depend on factors such as available computing resources, the number of feature points expected to be needed enable a reliable analysis, etc. For instance, the pixel blocks may have a dimension of 4x4 pixels, 16x16 pixels, 32x32 or greater, to mention a few non-limiting examples.

The matching second feature points 352 may subsequently be determined by searching for matching features in the second subset of pixels 3222a of the second partial image frame 322. The search for matching features may as indicated in Fig. 10b be conducted in pixel blocks. Any conventional suitable feature matching algorithm may be used.

Having determined a set of matching pairs of first and second feature points 351, 352, the analysis proceeds to step S33' to determine for each first feature point 351 a parallax error with respect to its matching second feature point 352.

The parallax error may be determined by computing a distance between each first feature point 351 and its matching second feature point 352, when mapped to the common compositing surface 360, i.e., within the common coordinate system (u,v). In Fig. 10b, the distance between matching first and second feature points 351, 352 is indicated by D₁, D₂, ... Dₙ₋₁, Dₙ. Where a group of first feature points are identified in a pixel block, it may typically suffice to compute a single representative distance between the group of first feature points and the group of matching second feature points. For instance, a representative distance may be computed as a distance between the respective centroids of the groups of feature points. Thereby, a sequence of parallax errors D₁, D₂, ... Dₙ₋₁, Dₙ, corresponding to the sequence of matching pairs of first and second feature points may be determined.

Fig. 11a-b are schematic diagrams of how the parallax error (e.g., computed in accordance with the approach set out above) tends to vary when the peripheral scene portion 10b does not include a ceiling (Fig. 11a) and when the peripheral scene portion 10b includes a ceiling 12 (Fig. 11b). That is, Fig. 11a may correspond to the scenario shown in Fig. 3. Fig. 11b may correspond to a ceiling-mounted configuration as shown for instance in Fig. 1. The diagrams show the parallax error D as a function of location X along the radial direction R1. The location X may be for instance be expressed in terms of distance from the horizon pixels H in the first partial image frame 321, or represent the position (index) of the parallax error D in the sequence of parallax errors (e.g., where a greater distance from the horizon pixels H corresponds to a later position in the sequence). In each diagram, the horizon H coincides with the D-axis.

Both in the mounting scenario of Fig. 1 and Fig. 3, it is expected that the parallax error D as shown in Fig. 11a-b will be low between matching feature points close to the horizon H as it is located at infinity. At greater viewing angles the parallax error D is expected to gradually increase as the distance to imaged objects will decrease and hence gradually will approach the DOF of the camera 210. Thus, as the viewing angle is increased, the different viewpoints of the first and second image sensors 231, 232 will cause a gradually increasing parallax error between matching feature points in the first and second partial image frames. In case the peripheral scene portion 10b includes the ceiling 12, the discrepancy will tend to increase more strongly than in absence of a ceiling, as shown in Fig. 10a-b. Indeed, in the case the peripheral scene portion 10b in Fig. 3 is formed by an open and clear sky, there may be no appreciable increase of the parallax error at all.

Hence, the above discussed scenarios tend to result in different variations of the parallax error D. Therefore, the variation of the parallax error D in the radial direction R1 is a useful basis for determining whether to configure the image processing stage 140 in accordance with the ceiling operational mode or not.

Accordingly, at step S34', the method proceeds with analyzing a variation of the parallax error D in the radial direction R1 to determine whether the parallax error increases in the radial direction R1. For instance, the processing device 150 may determine whether the sequence of parallax errors D₁, D₂, ... Dₙ₋₁, Dₙ determined at step S33' defines an increasing sequence of parallax errors.

For an increased robustness, the analysis may comprise determining whether the parallax error D for at least one of the first feature points 351 exceeds a magnitude threshold T_{M}, and/or whether a rate of increase of the parallax error in the radial direction R1 exceeds a rate threshold T_{R}. These thresholds are schematically indicated in the diagrams of Fig. 11a-b. As may be seen, both the magnitude of the parallax error and the rate of increase (e.g., dD/dX) are smaller in Fig. 11a (the peripheral scene portion 10b includes no ceiling) than in Fig. 11b (the peripheral scene portion 10b includes a ceiling 12). Accordingly, a condition for determining to configure the image processing stage 140 to operate in accordance with the ceiling operational mode may be that the magnitude threshold T_{M} is exceeded for at least a sub-set of the matching feature points 251, 252, and/or that the rate threshold T_{R} is exceeded over at least a portion of the sequence of parallax errors D.

The values of the magnitude threshold T_{M} and the rate threshold T_{R} may be set in dependence on desired sensitivity of the method. That is, smaller values of the magnitude threshold T_{M} and the rate threshold T_{R} may result in more often predicting a ceiling-mounted configuration, and thus applying the ceiling operational mode in a greater range of scenarios (such as in the scenario of Fig. 2, even for greater distances to the ceiling 12). Conversely, greater values of the magnitude threshold T_{M} and the rate threshold T_{R} may result in less often predicting a ceiling-mounted configuration, and thus applying the ceiling operational mode more selectively.

It is further noted that it in general is not necessary to determine and analyze the parallax error over the full radial distance / range of viewing angles from the horizon pixels H to the edge E1 in the radial direction R1. Rather, it may suffice to confine the analysis to a part of the distance / range. For instance, the parallax error D may be determined only for pixel blocks distributed between the horizon pixels H and a point located about 50-60% of the radial distance to the edge E1. If the parallax error D over this radial distance increases at a rate exceeding a rate threshold and/or exceeds a magnitude threshold, it may with a relatively large likelihood be concluded that the camera 110 is in a ceiling-mounted configuration, and accordingly configure the image processing stage 140 to operate in accordance with the ceiling operational mode.

To further improve the reliability of the ceiling detection procedure, in particular to reduce a risk of false positives (i.e., erroneously predicting that the camera 210 is in a ceiling-mounted configuration), the parallax-based analysis discussed above may be applied in more than one radial direction, or more specifically to more than one pair of partial image frames. Thus, steps S31' to S34' may be applied to overlapping subsets of pixels of two or more pairs of partial image frames captured by two or more respective pairs of image sensors. For instance, with reference to Fig. 9, the analysis may be applied to overlapping subsets of pixels (corresponding to subsets 3212a and 3222a in Fig. 10b) from (overlapping) pairs of partial image frames including one or more of: the second partial image frame 322 and the third partial image frame 323, the third partial image frame 323 and the fourth partial image frame 324, the first partial image frame 321 and the fourth partial image frame 324. Accordingly, a further condition for the processing device 150 to configure the image processing stage 140 to operate in accordance with the ceiling operational mode may be that the variation of the parallax error (i.e., the sequence of parallax errors) determined for each of the pairs of partial image frames increases for at least a minimum number of pairs of partial image frames, such as for at least a majority of, or all pairs of partial image frames.

Responsive to determining at S34' that the parallax error increases in the radial direction R1 (or where more than one pair of partial image frames are analyzed, for at least a minimum number of pairs of partial image frames), the method at S3 5' proceeds to step S4 and thus configures the image processing stage 140 to operate in accordance with the ceiling operational mode (Ceiling mode branch). On the other hand, responsive to determining at S34' that the parallax error does not increase in the radial direction R1 (or where more than one pair of partial image frames are analyzed, does not increase for at least a minimum number of pairs of partial image frames), the method at S36' proceeds to step S5 and thus configures the image processing stage 140 to operate in accordance with the non-ceiling operational mode (Non-ceiling mode branch). The method may thereafter proceed as discussed above with reference to the contrast-based approach. Accordingly, the camera 210 may proceed to monitoring operation, and thus capture partial image frames (substantially simultaneously) by each of its image sensors (e.g., partial image frames 321, 322, 323 captured by image sensors 231, 232, 233), and stitch the partial image frames by the stitching block 260 to form a composite image frame 330. This process may be repeated (e.g., at a frame rate of the camera 210) to generate a video sequence of composited image frames 330.

As mentioned above, the stitching block 260 may be arranged upstream the image processing stage 140 or, optionally, be arranged as an image processing block 260 of the image processing stage 140. In the former case, the stitching block 260 may thus stitch simultaneously captured partial image frames and provide stitched composite image frames 330 to the image processing stage 140. In the latter case, the stitching block 260 may (when the image processing stage 140 is configured in accordance with the ceiling configuration mode) be configured to exclude the second set of pixels of the partial image frames during stitching, such that only the first set of pixels of the partial image frames are stitched to form a composite image frame 330. The composite image frame 330 may subsequently be provided to one or more further downstream image processing operations of the image processing stage 140, such as image processing operations 141, 142, 14n, discussed above with reference to Fig. 5.

It is contemplated that the image processing-based analysis described above with reference to the camera 110 and the flow charts of Fig. 12 and 13 may be especially useful and effective if the FOV of the camera 110 is at least 190 degrees (such as at least 200 degrees), and if the camera 110 is ceiling-mounted such that the portion of the ceiling 12 closest to the camera 110 and within the FOV of the camera 110 is in front of (and hence outside) the DOF of the camera 110. In a typical scenario, the lower limit of the DOF of the camera 110 may be located at least 2 meters, typically at least 3 meters, from the camera 110 (more specifically, from the image sensor 130). The upper limit of the DOF may vary but may for instance be located at least 5 meters from the camera 110. Meanwhile, a distance between the image sensor 130 and the ceiling 12 (e.g., measured along the optical path from the image sensor 130 to the closest depicted portion of the ceiling 12) may be at most 1 m, at most 0.5 m, or at most 0.1 m. This discussion applies correspondingly to the further image processing-based approach described with reference to the multi-sensor camera 210 of Fig. 8 and the flow charts of Fig. 12 and 14.

The person skilled in the art realizes that the present invention by no means is limited to the examples described above. On the contrary, many modifications and variations are possible within the scope of the appended claims.

## Claims

1. A method for controlling an image processing stage (140) for processing image data (300) captured by a surveillance camera (110) having a field-of-view (FOV) greater than 180 degrees and being mounted in a downward looking configuration to monitor a scene (10), the method comprising:
obtaining image data (300) captured by the surveillance camera (110), wherein the image data includes a first set of pixels (312) depicting a central scene portion (10a) located below a horizon (H) in the scene (10), and a second set of pixels (314) depicting a peripheral scene portion (10b) located above the horizon (H),
performing a ceiling detection procedure comprising analyzing pixels (316a) of the second set of pixels (314), to determine whether to configure the image processing stage (140) to operate in accordance with a ceiling operational mode, and
in response to determining to configure the image processing stage (140) to operate in accordance with the ceiling operational mode, configuring the image processing stage (140) to operate in accordance with the ceiling operational mode while processing subsequently captured image data (300), wherein the subsequently captured image data (300) comprises a first set of pixels (312) depicting the central scene portion (10a) and a second set of pixels (314) depicting the peripheral scene portion (10b), wherein the image processing stage (140) comprises at least one image processing operation (141, 142), and wherein the ceiling operational mode includes applying the at least one image processing operation (141, 142) to the first set of pixels (312) of the captured image data (300) but not to the second set of pixels (314) of the captured image data (300).

2. The method according to claim 1, wherein the at least one image processing operation (141, 142) includes at least one of: an image transform operation, an encoding operation, and/or an image analysis operation.

3. The method according to any one of the preceding claims, further comprising, in response to determining to configure the image processing stage (140) to operate in accordance with the ceiling operational mode:
controlling a first setting of the surveillance camera (110), used by the surveillance camera (110) during capturing of the subsequently captured image data (300), based on a first pixel statistics, wherein the first pixel statistics is based on pixels (312) depicting the central scene portion (10a) but not pixels (314) depicting the peripheral scene portion (10b); and/or
controlling a second setting of the surveillance camera (110), used by the surveillance camera (110) during capturing of the subsequently captured image data (300), based on a second pixel statistics, wherein the second pixel statistics is based on pixels (312) depicting the peripheral scene portion (10b) but not pixels depicting the central scene portion (10a).

4. The method according to any one of the preceding claims, further comprising, in response to determining to configure the image processing stage (140) to operate in accordance with the ceiling operational mode, discarding the second set of pixels (314) of the subsequently captured image data (300).

5. The method according to any one of the preceding claims, further comprising, in response to determining to not configure the image processing stage (140) to operate in accordance with the ceiling operational mode, configuring the image processing stage (140) to operate in accordance with a non-ceiling operational mode, wherein the non-ceiling operational mode includes applying the at least one image processing operation (141, 142) to the first set of pixels (312) and the second set of pixels (314) of the subsequently captured image data (300).

6. The method according to any one of the preceding claims,
wherein the image data is an image frame (300), and
wherein performing the ceiling detection procedure comprises:
determining a contrast metric for each of a set of pixels or pixel blocks (316a) of the second set of pixels (314) distributed in a radial direction (R) with increasing distance from pixels depicting the horizon (H), and
analyzing a variation of the contrast metric in the radial direction (R) to identify whether the variation of the contrast metric defines a peak (Pc),
wherein a condition for determining to configure the image processing stage (140) to operate in accordance with the ceiling operational mode is that the peak (Pc) is identified.

7. The method according to claim 6, wherein the ceiling detection procedure further comprises:
determining, for each of at least one further radial direction (R', R"), a contrast metric for each of a set of pixels or pixel blocks (316a) of the second set of pixels (314) distributed in the respective radial direction (R', R") with increasing distance from pixels depicting the horizon (H),
analyzing a respective variation of the contrast metric in the respective radial direction (R', R") to identify whether the respective variation of the contrast metric defines a respective peak (Pc), and
wherein a condition for determining to configure the image processing stage (140) to operate in accordance with the ceiling operational mode is that the peak (Pc) is identified for at least a minimum number of the radial directions (R, R', R"), optionally for each of the radial directions (R, R', R").

8. The method according to any one of claims 6-7, wherein the subsequently captured image data (300) comprises a sequence of image frames (300), each image frame comprising a first set of pixels (312) depicting the central scene portion (10a) and a second set of pixels (314) depicting the peripheral scene portion (10b), and wherein the method further comprises processing the sequence of image frames (300) by the image processing stage (140).

9. The method according to any one of claims 1-5,
wherein the surveillance camera (210) comprises a lens arrangement (220) and at least a first and second image sensor (231, 232, 233) arranged behind the lens arrangement (220) such that each image sensor (231, 232, 233) depicts a portion of the scene (10) from a respective viewpoint,
wherein obtaining the image data (320) comprises obtaining a first partial image frame (321) captured by the first image sensor (231) and a second partial image frame (322) captured by the second image sensor (232), wherein the second set of pixels (326) of the image data (320) comprises a first subset of pixels (3212a) from the first partial image frame (321) and a second subset of pixels (3222a) from the second partial image frame (322), and wherein the first and second subsets of pixels (3212a, 3222a) depict overlapping portions (334) of the peripheral scene portion (10b), and
wherein performing the ceiling detection procedure comprises:
identifying in the first subset of pixels (3212a) a set of first feature points (351) distributed in a radial direction (R1) with increasing distance from pixels depicting the horizon (H) in the first partial image frame (321),
identifying for each first feature point (351) a matching second feature point (352) in the second subset of pixels (3222a),
determining for each first feature point (351) a parallax error with respect to its matching second feature point (352), and
analyzing a variation of the parallax error in the radial direction (R1) to determine whether the parallax error increases in the radial direction (R1),
wherein a condition for determining to configure the image processing stage (140) to operate in accordance with the ceiling operational mode is that the parallax error increases in the radial direction (R1).

10. The method according to claim 9, further comprising
mapping the first feature points (351) and the matching second feature points (352) to a common compositing surface (360),
wherein the parallax error for each first feature point (351) is determined by computing a distance between the first feature point (351) and its matching second feature point (352), when mapped to the common compositing surface (360).

11. The method according to any one of claims 9-10, wherein the second set of pixels (326) of the image data (320) further comprises a third subset of pixels from a third partial image frame and a fourth subset of pixels from a fourth partial image frame, and wherein the third and fourth subsets of pixels depict overlapping portions of the peripheral scene portion (10b), and
wherein performing the ceiling detection procedure further comprises:
identifying in the third subset of pixels a set of third feature points distributed in a radial direction with increasing distance from pixels depicting the horizon in the third partial image frame,
identifying for each third feature point a matching fourth feature point in the fourth subset of pixels,
determining for each third feature point a parallax error with respect to its matching fourth feature point, and
analyzing a variation of the parallax error in the radial direction of the third partial image frame to determine whether the parallax error increases in the radial direction of the third partial image frame,
wherein a further condition for determining to configure the image processing stage (140) to operate in accordance with the ceiling operational mode is that parallax error determined for the third feature points increases in the radial direction of the third partial image frame.

12. The method according to any one of claims 9-11,
wherein the subsequently captured image data processed by the image processing stage (140) comprises a sequence of composite image frames (330), each composite image frame (330) formed by stitching partial image frames (321, 322, 323) captured by the at least first and second image sensors (231, 232, 233) such that each composite image frame (330) comprises a first set of pixels (331) depicting the central scene portion (10a) and a second set of pixels (332) depicting the peripheral scene portion (10b), or
wherein the subsequently captured image data processed by the image processing stage (140) comprises partial image frames (321, 322, 323) captured by the at least first and second image sensors (231, 232, 233), wherein the captured partial image frames (321, 322, 323) in combination comprises a first set of pixels (325) depicting the central scene portion (10a) and a second set of pixels (326) depicting the peripheral scene portion (10b), and
wherein the at least one image processing operation of the image processing stage (140) comprises a stitching operation (260) for forming a composite image frame (330) by stitching the partial image frames (321, 322, 323), and wherein the stitching operation (260), in the ceiling operational mode, is applied to the first set of pixels (325) of the partial image frames (321, 322, 323) but not to the second set of pixels (326) of the partial image frames (321, 322, 323).

13. The method according to any one of the preceding claims, wherein the surveillance camera (110, 210) comprises an orientation sensor (160), wherein the ceiling detection procedure is performed responsive to detecting, by the orientation sensor, a downward looking orientation of the surveillance camera (110, 210).

14. A processing device (150) configured to perform the method of any one of the preceding claims for controlling an image processing stage (140) for processing image data (300) captured by a surveillance camera (110).

15. A computer program product comprising computer program code portions configured to perform the method according to any one of claims 1-13.

## Amended claims

### Amended claims in accordance with Rule 137(2) EPC.

1. A method for controlling an image processing stage (140) for processing image data (300) captured by a surveillance camera (110) having a field-of-view (FOV) greater than 180 degrees and being mounted in a downward looking configuration to monitor a scene (10) wherein an optical axis (O) of the surveillance camera (110) points towards ground, the method comprising:
obtaining image data (300) captured by the surveillance camera (110), wherein the image data includes a first set of pixels (312) depicting a central scene portion (10a) located below a horizon (H) in the scene (10), and a second set of pixels (314) depicting a peripheral scene portion (10b) located above the horizon (H), wherein the method further comprises obtaining predetermined horizon data indicating pixel coordinates for the horizon (H) in the image data, and identifying the second set of pixels (314) using the predetermined horizon data, and wherein the pixel coordinates of the horizon (H) in the image data (300) corresponds to a viewing angle of 90 degrees with respect to the optical axis (O),
performing a ceiling detection procedure comprising analyzing pixels (316a) of the second set of pixels (314), to determine whether to configure the image processing stage (140) to operate in accordance with a ceiling operational mode, and
in response to determining to configure the image processing stage (140) to operate in accordance with the ceiling operational mode, configuring the image processing stage (140) to operate in accordance with the ceiling operational mode while processing subsequently captured image data (300), wherein the subsequently captured image data (300) comprises a first set of pixels (312) depicting the central scene portion (10a) and a second set of pixels (314) depicting the peripheral scene portion (10b), wherein the image processing stage (140) comprises at least one image processing operation (141, 142), and wherein the ceiling operational mode includes applying the at least one image processing operation (141, 142) to the first set of pixels (312) of the captured image data (300) but not to the second set of pixels (314) of the captured image data (300), wherein the at least one image processing operation (141, 142) includes at least one of: an image transform operation, an encoding operation, and/or an image analysis operation.

2. The method according to claim 1, further comprising, in response to determining to configure the image processing stage (140) to operate in accordance with the ceiling operational mode:
controlling a first setting of the surveillance camera (110), used by the surveillance camera (110) during capturing of the subsequently captured image data (300), based on a first pixel statistics, wherein the first pixel statistics is indicative of a lighting condition in the central scene portion (10a) and is based on pixels (312) depicting the central scene portion (10a) but not pixels (314) depicting the peripheral scene portion (10b), and wherein the first setting is a setting of one or more exposure-related control parameters of the surveillance camera (110), including shutter speed, aperture, ISO value and/or camera lighting; and/or
controlling a second setting of the surveillance camera (110), used by the surveillance camera (110) during capturing of the subsequently captured image data (300), based on a second pixel statistics, wherein the second pixel statistics is based on an intensity of pixels (312) depicting the peripheral scene portion (10b) but not pixels depicting the central scene portion (10a), and wherein the second setting is an image capturing frame rate of the surveillance camera (110) and is controlled so as to reduce an impact on flickering lights in the peripheral scene portion (10b).

3. The method according to any one of the preceding claims, further comprising, in response to determining to configure the image processing stage (140) to operate in accordance with the ceiling operational mode, discarding the second set of pixels (314) of the subsequently captured image data (300).

4. The method according to any one of the preceding claims, further comprising, in response to determining to not configure the image processing stage (140) to operate in accordance with the ceiling operational mode, configuring the image processing stage (140) to operate in accordance with a non-ceiling operational mode, wherein the non-ceiling operational mode includes applying the at least one image processing operation (141, 142) to the first set of pixels (312) and the second set of pixels (314) of the subsequently captured image data (300).

5. The method according to any one of the preceding claims,
wherein the image data is an image frame (300), and
wherein performing the ceiling detection procedure comprises:
determining a contrast metric for each of a set of pixels or pixel blocks (316a) of the second set of pixels (314) distributed in a radial direction (R) with increasing distance from pixels depicting the horizon (H), and
analyzing a variation of the contrast metric in the radial direction (R) to identify whether the variation of the contrast metric defines a peak (P_{C}),
wherein a condition for determining to configure the image processing stage (140) to operate in accordance with the ceiling operational mode is that the peak (P_{C}) is identified.

6. The method according to claim 5, wherein the ceiling detection procedure further comprises:
determining, for each of at least one further radial direction (R', R"), a contrast metric for each of a set of pixels or pixel blocks (316a) of the second set of pixels (314) distributed in the respective radial direction (R', R") with increasing distance from pixels depicting the horizon (H),
analyzing a respective variation of the contrast metric in the respective radial direction (R', R") to identify whether the respective variation of the contrast metric defines a respective peak (P_{C}), and
wherein a condition for determining to configure the image processing stage (140) to operate in accordance with the ceiling operational mode is that the peak (P_{C}) is identified for at least a minimum number of the radial directions (R, R', R"), optionally for each of the radial directions (R, R', R").

7. The method according to any one of claims 5-6, wherein the subsequently captured image data (300) comprises a sequence of image frames (300), each image frame comprising a first set of pixels (312) depicting the central scene portion (10a) and a second set of pixels (314) depicting the peripheral scene portion (10b), and wherein the method further comprises processing the sequence of image frames (300) by the image processing stage (140).

8. The method according to any one of claims 1-4,
wherein the surveillance camera (210) comprises a lens arrangement (220) and at least a first and second image sensor (231, 232, 233) arranged behind the lens arrangement (220) such that each image sensor (231, 232, 233) depicts a portion of the scene (10) from a respective viewpoint,
wherein obtaining the image data (320) comprises obtaining a first partial image frame (321) captured by the first image sensor (231) and a second partial image frame (322) captured by the second image sensor (232), wherein the second set of pixels (326) of the image data (320) comprises a first subset of pixels (3212a) from the first partial image frame (321) and a second subset of pixels (3222a) from the second partial image frame (322), and wherein the first and second subsets of pixels (3212a, 3222a) depict overlapping portions (334) of the peripheral scene portion (10b), and
wherein performing the ceiling detection procedure comprises:
identifying in the first subset of pixels (3212a) a set of first feature points (351) distributed in a radial direction (R1) with increasing distance from pixels depicting the horizon (H) in the first partial image frame (321),
identifying for each first feature point (351) a matching second feature point (352) in the second subset of pixels (3222a),
determining for each first feature point (351) a parallax error with respect to its matching second feature point (352), and
analyzing a variation of the parallax error in the radial direction (R1) to determine whether the parallax error increases in the radial direction (R1),
wherein a condition for determining to configure the image processing stage (140) to operate in accordance with the ceiling operational mode is that the parallax error increases in the radial direction (R1).

9. The method according to claim 8, further comprising
mapping the first feature points (351) and the matching second feature points (352) to a common compositing surface (360),
wherein the parallax error for each first feature point (351) is determined by computing a distance between the first feature point (351) and its matching second feature point (352), when mapped to the common compositing surface (360).

10. The method according to any one of claims 8-9, wherein the second set of pixels (326) of the image data (320) further comprises a third subset of pixels from a third partial image frame and a fourth subset of pixels from a fourth partial image frame, and wherein the third and fourth subsets of pixels depict overlapping portions of the peripheral scene portion (10b), and
wherein performing the ceiling detection procedure further comprises:
identifying in the third subset of pixels a set of third feature points distributed in a radial direction with increasing distance from pixels depicting the horizon in the third partial image frame,
identifying for each third feature point a matching fourth feature point in the fourth subset of pixels,
determining for each third feature point a parallax error with respect to its matching fourth feature point, and
analyzing a variation of the parallax error in the radial direction of the third partial image frame to determine whether the parallax error increases in the radial direction of the third partial image frame,
wherein a further condition for determining to configure the image processing stage (140) to operate in accordance with the ceiling operational mode is that parallax error determined for the third feature points increases in the radial direction of the third partial image frame.

11. The method according to any one of claims 8-10,
wherein the subsequently captured image data processed by the image processing stage (140) comprises a sequence of composite image frames (330), each composite image frame (330) formed by stitching partial image frames (321, 322, 323) captured by the at least first and second image sensors (231, 232, 233) such that each composite image frame (330) comprises a first set of pixels (331) depicting the central scene portion (10a) and a second set of pixels (332) depicting the peripheral scene portion (10b), or
wherein the subsequently captured image data processed by the image processing stage (140) comprises partial image frames (321, 322, 323) captured by the at least first and second image sensors (231, 232, 233), wherein the captured partial image frames (321, 322, 323) in combination comprises a first set of pixels (325) depicting the central scene portion (10a) and a second set of pixels (326) depicting the peripheral scene portion (10b), and
wherein the at least one image processing operation of the image processing stage (140) comprises a stitching operation (260) for forming a composite image frame (330) by stitching the partial image frames (321, 322, 323), and wherein the stitching operation (260), in the ceiling operational mode, is applied to the first set of pixels (325) of the partial image frames (321, 322, 323) but not to the second set of pixels (326) of the partial image frames (321, 322, 323).

12. The method according to any one of the preceding claims, wherein the surveillance camera (110, 210) comprises an orientation sensor (160), wherein the ceiling detection procedure is performed responsive to detecting, by the orientation sensor, a downward looking orientation of the surveillance camera (110, 210).

13. A processing device (150) configured to perform the method of any one of the preceding claims for controlling an image processing stage (140) for processing image data (300) captured by a surveillance camera (110).

14. A computer program product comprising computer program code portions configured to perform the method according to any one of claims 1-12.
